Europäisches Patentamt

European Patent Office

Office européen des brevets

(19)

(11) Publication number: **0 144 244**
**A2**

(12) **EUROPEAN PATENT APPLICATION**

(21) Application number: **84308464.1**

(22) Date of filing: **06.12.84**

(51) Int. Cl.⁴: **G 06 F 15/16**

(30) Priority: **07.12.83 US 558925**

(43) Date of publication of application:
**12.06.85 Bulletin 85/24**

(84) Designated Contracting States:
**DE FR GB**

(71) Applicant: **CIPHERLINK CORPORATION**
**203 South Norton Avenue**
**Los Angeles California 90004(US)**

(72) Inventor: **Ha, Micheal Bruce**
**1520 West 22nd Street**
**Los Angeles California 90007(US)**

(72) Inventor: **Lesin, Eric Steven**
**203 South Norton Avenue**
**Los Angeles California 90004(US)**

(74) Representative: **Enskat, Michael Antony Frank  et al,**
**PRITEX CONSULTANCY 69 Belmont Road**
**Uxbridge Middlesex UB8 1QU(GB)**

(54) **Data transport system and method.**

(57) A transcription computer (10) transports data from a source computer (12) to a target computer (14).

A virtual terminal, which is a video terminal connected to the transcription computer, is used to virtually interact with the source computer (12) and the target computer (14) as their terminals at the application level, in that, the virtual terminal communicates and interacts with application programs of either the source or target computer (12, 14).

By the use of a general purpose program stored and executed in the transcription computer (10), sequential data fields of sequential records of a data base of the application program of the source computer (12) are automatically read from the source computer (12) and stored in the transcription computer (10).

The data fields read are then mapped to expected prompts of the application programs of the target computer (14). As the target computer (14) prompts, the transcription computer (10) sequentially responds so as to automatically load the data of data fields of the records of the data base of the application program of the source computer (12) into sequential data fields of sequential records of a data base of an application program of the target computer (14) thereby automatically transferring data under a general purpose program notwithstanding differences in source computer architecture, target computer architecture, communications protocol and data base format.

./...

FIG.1.

0144244

## DATA TRANSPORT SYSTEM AND METHOD

The present application relates to
transporting data between digital computers by the
use of a transcription computer that transports
data from a source computer to a target
computer.

Users of computer systems have long
been confronted with the problem of transferring
data between application programs stored in
separate computers.  Data bases comprising
format data and raw data, are generally not
compatible.  The application programs have data
bases with different formats and different raw
data fields.  Additionally, the manner of
transferring data between computer systems is
also incompatible.  Communications protocols
and data formats of communicating data are
generally peculiar to a specific type of
computer program, system or network.

To transfer raw data between various application programs of various computer systems, an operator would normally read manually data from an application program stored on a source computer system and then manually re-enter the raw data into the data base of an application program stored in a target computer. This manual read and re-entry is done at great expense and time.

Another manner in which raw data can be transferred between application programs of various computers is for a programmer to write a special purpose program for each particular type of application program involved. The special purpose program sequentially reads the data base and strips the format data, thereby resulting in a string of raw data fields. Next, the special purpose program then causes the stripped raw data

**0144244**

to be entered into data fields of a data base of an application program of another computer. The special purpose programs have to be written for each type of data base because the data formats are different among application programs.

Furthermore, the special purpose program would be written in various computer languages because certain computers can only execute programs written in specific languages. Thus, for each type of application level program on each different type of computer, a plurality of special purpose application programs would be required to transfer data between the application programs of various computers. The development of these special purpose programs consumes great amounts of time at great expense.

The International Standards Organization (ISO) has attempted to develop a standard wherein standard interface requirements can be used by various computers so as to eliminate this problem. The ISO developed a seven layer definitional approach for communicating and transporting data between various computers. Each layer is defined by its scope of interface responsibility and each layer may have several specific standard specifications, each of which is to be used by computer users subscribing to the standard. The seven layers are defined in relative order by their scope relating to their relative proximity of the computer interaction with the operator, and the seven layers are as follows: one, physical connection; two, data link; three, network; four, transport; five, session; six, presentation; and seven, application.

**0144244**

The first or physical connection layer is concerned with the actual electronic specifications of the links connected between computer systems. An example of a possible specific standard is the RS232 interface specification with a twelve hundred baud rate.

The data link level is concerned with the transfer of discrete frames or packets. For example, a frame of data bytes could be marked at the beginning of the frame and at the end of the frame with a unique flag character that is used to distinguish a frame. There can be as a part of this data link layer, a frame check sum requirement which may be a cyclic redundancy character generated pursuant to a polynomial as is well known in the art.

The network layer is concerned with the route the frame is to take in transit to a remote computer port, and, the network layer is also concerned with guarantying that the frame was correctly delivered to the intended remote computer port. For example, the frame could contain a address code for the port and a protocol code which specifies the type of message, e.g., acknowledgment, data, etc. Thus, the network level guarantees delivery between source and destination ports.

The transport layer is concerned with the compilation of various frames so as to compile within the destination or target computer a block of data comprising the data of multiple frames. This compilation results in a block of data in the same order as it was in the source computer.

The session layer is concerned with the logical connection between application programs of the target and source computers. Thus, the session layer is concerned with the proper sequence of data block transfers to establish a connection through which application programs can communicate. For example, an application program is instructed to transfer data to another application program of another computer through the phone lines by the use of a modem. The session layer would first cause autodialing and transmission of a username followed by prompts and responses, both of which comunicate data as is well known in the art.

The presentation layer is concerned with the format of the individual characters and the format in which those characters may be presented to the user or operator. For example, characters are encoded in ASCII character format with 80 characters per line with 56 lines per page as a page format.

The application layer is the perspective and interactive level between the user and the computer. The operator interacts with the application program typically through a video terminal. For example, an operator may instruct an application program to print a file by entering a print command as an input to the application program.

Because different application programs are used to solve a variety of problems, application programs typically do not have the same data base formats. For example, the data base for a doctor's office may have the patient's name as the name data field of a record, whereas the data base of an insurance carrier application program may have the insured account number as the name data field of a record. Where the format of a data base is format incompatible with the data base of another application program, the data base must be transformed to comply with the data base of that other application program because that application program can only process data in predetermined formats.

Each of the seven layers is transparent to each other such that each layer performs its function notwithstanding the other layers. For example, the application layer is not responsible for the generation of check sum characters during the transmission of a frame; or, for example, the network layer which is responsible for the routing data, is not involved with correct data-base formatting of data transferred between data bases of application programs.

These seven layers are presently not delineated by the ISO with much specificity. The industry in general is not expected for many years to develop detail criteria nor supply computers in compliance thereto. Industry self interests will continue to motivate the industry as a whole to produce incompatible systems with each participant developing systems of unique design with associated market advantages rather than thinking in terms of this seven layer approach as recommended by the ISO. There is not an efficient and effective means for automatic data transport between various computers using various types of application programs because of the lack of a consistent comprehensive communications standard. Typical computer networks and systems have their own unique communications methods which invariably have many of the ISO layer overlapped and combined. Consequently, the industry as a

2                                    01442<del>64</del>251

whole does not have a universal and automatic method of communicating data between different application programs of different computers and networks.

Furthermore, data base formats are invariably different from application program to application program, with each tailored to a unique task. Consequently, even if the first six layers were an industry standard to effect universal transport, additional special purpose programs would be required to transform the data base so it could be used by a resident application program.

However, the first and second layers have acquired some standardization. Typically, a computer system will have a RS232 port of a communications controller. Through these controllers and the RS232 ports, the computer system can send a series of bytes of data and this information can be communicated through the phone lines and received by another computer system. Additionally, with respect to the data link layer, most computer systems do transfer in bytes representing alphanumeric data. But the benefit of the standardization of these two layers has been used solely to transfer a data base and not to transform the data base so that the raw data therein can not be used by different application programs. Furthermore, the standardization of these two layers solves specific problems of communicating with specific video terminals or ports and are not used in a universal manner as a part of the seven layer approach.

The third layer is substantially different between various computer systems, and layers four, five, six, and seven are increasingly more diverse so that only layers one and two presently provide a basis for any standard communications technique that can be used for automatic data transport between different application programs of different computer systems. Thus, the only universal technique used has been manual entry or special program generation as a means to effect data transport between different types of computer systems using different application programs with different data bases.

## SUMMARY

It is an object of the present invention to transfer data between various computers and data bases in an efficient and effective manner. The present invention relates to data transportation between computer systems. More specifically, it relates to the use of physical line level and data link level standards and the use of a general purpose transcripting program, which is executed on a transcription computer, to effect data transport between different data bases of different application programs in different source and target computer systems.

The transcription computer is connected between the source computer and the target computer. The transcription, source and target computers can be of different types. The application programs that run in the computers and the data base of each application programs can also be different. The general purpose transcription program is selected by an operator at a virtual terminal which is connected to the transcription computer. The term "virtual terminal" is used here because this virtual terminal acts also as a terminal for either the source or target computer.

Thus, the virtual terminal can be used as a terminal for the source or target computer while being physically connected to the transcription computer. The virtual terminal is used by an operator of the transcription computer. The operator of the transcription computer can enter instructions into the virtual terminal causing responses of either the transcription, source or target computer. The source or target computer functions as though the virtual terminal is one of its normally connected terminals and hence the use of the term "virtual terminal".

By the use of the general purpose transcription program and the virtual terminal, the operator performs a short enact session wherein a couple of records of the data base are read from the source computer running a particular application program. The enact session occurs on the source computer wherefrom prompts of the source computer and the responses of the operator are displayed and concurrently stored in the memory of the transcription computer. The operator can determine what are the expected prompts of the source computer.

Upon reviewing these few records of a data base of the application program of the source computer, the operator can also determine the format of the data of the records of the data base of the application program. The operator can distinguish between format data and raw data. The format data are typically prompts that are used to delineate and segment the raw data, and the raw data is the data that is of importance and is to be transferred.

The operator obtains a list of all the records which records include the raw data to be transferred to the target computer, and the list of records is stored in the transcription computer. By the use of the general purpose transcription program, a script can be generated. The script comprises expected prompts of the source computer and their respective responses. This script is a list of responses and their respective prompts of the application program that cause records of the data base to be transmitted to the virtual terminal. These responses cause the source computer to transmit in sequential order all of the records of the list of records including all of the raw data of the data base of the application program that is to be transferred to the target computer.

When a prompt is displayed, the transcription computer determines if that prompt was expected, and, if expected, the transcription computer returns a corresponding response in the script which response in turn causes the application program of the source computer to display a record of the data base of the source computer. The responses are in part derived from the list of records. The transcription computer sequentially stores all of the records transmitted from the source computer. All of the records of the data base of the application program of the source computer are sequentially displayed on the screen of the virtual terminal as the general purpose transcription program concurrently transcribes, i.e.

0144244

stores, these records into files in the memory of the transcription computer thereby storing all of the records of the
data base of the application program of the source computer,
wherein, each record comprises format data and raw data.  It
is this raw data that is then to be transported to the target
computer.

An enact session now occurs on the target computer.
An operator establishes communication with a target computer
and causes the display of a couple of records.  This enact
target session is also transcribed into the transcription
computer.  The operator reviews this enact target session and
recognizes which prompts are used by the application program
of the target computer.  The prompts of the enact target
session are then mapped to data in data fields in which are
stored the raw data of the records of the data base of the
application program of the source computer.

A target script is then generated.  The target script
comprises the expected prompts from the target computer and
the associated responses which are, in part, the raw data
from the source computer.

After generating the script, the transcription
computer establishes communication with the target computer and
transports the raw data within the script.  As the target
computer responds to the transcription computer with a prompt,
the transcription computer recognizes the prompts and responds
by transmitting an associated response.  Each prompt from the
target computer is followed by a response that may be raw data
from the source computer.

After sequentially responding to all of the prompts of the target computer, all the raw data in the script is stored into the data base of the application program of the target computer. The raw data entered into the data base of the target computer is now associated with the prompts of the target computer and those prompts may be data that becomes part of the format data of the data base.

Thus, the present invention uses a single general purpose computer program to transfer raw data of a data base of an application program on a source computer into the data fields of the data base of an application program on the target computer.

Accordingly, manual entry of the data base is no longer required. Additionally, no special purpose programs are required because the one general purpose program, which is based on mapping responses of a source computer and prompts of a target computer, can be used repetitively regardless of the computer system.

A requirement of the present invention is that the physical line interface and the data link format of the source computer and target computer be somewhat standard. These two interface requirements are minimal because most computers use in part standard physical line interfaces and standard data link formats to communicate with other systems throughout the industry. Only minor logistics and minor physical modifications are involved in connecting to different physical ports of the computers.

-13

These and other advantages will become more apparent in the following description of a preferred embodiment.


FIGURE DESCRIPTION

Figure 1 is a block diagram of a transcription computer connected to a source computer and a target computer.

Figure 2 is a flow chart of a transportation process.

Figure 3 is a table of a transcription program menu.

Figure 4 is an example of an autodialing session.

Figure 5 depicts an example of an enact source response file and an enact source prompt and response file.

Figure 6 depicts an example of a control character table.

Figure 7 depicts an example of an enact source response file and the enact source prompt and response file with control character markings.

Figure 8 depicts an example of a script source response file and a script source prompt file.

Figure 9 depicts an example of a F2 table.

Figure 10 depicts an example of a sequence table.

Figure 11 depicts an example of a user list.

Figure 12 depicts an example of a user record file.

Figure 13 depicts an example of an error source prompt file and an error source response file.

Figure 14 depicts an example of an operating source response file and an operating source prompt and response file.

Figure 15 depicts an example of an enact target response file and enact target prompt and response file.

Figure 16 depicts an example of the operating source prompt and response file and the enact target prompt and response file.

Figure 17 depicts an example of a F6 target prompt file.

Figure 18 depicts an example of a F1-to-F6 control character table.

Figure 19 depicts an example of an operating source prompt and response file mapped with control characters and an enact target prompt and response file mapped with control characters.

Figure 20 depicts an example of a script target prompt file and a script target response file.

Figure 21 depicts an example of an error target prompt file and an error target response file.


## PREFERRED EMBODIMENT

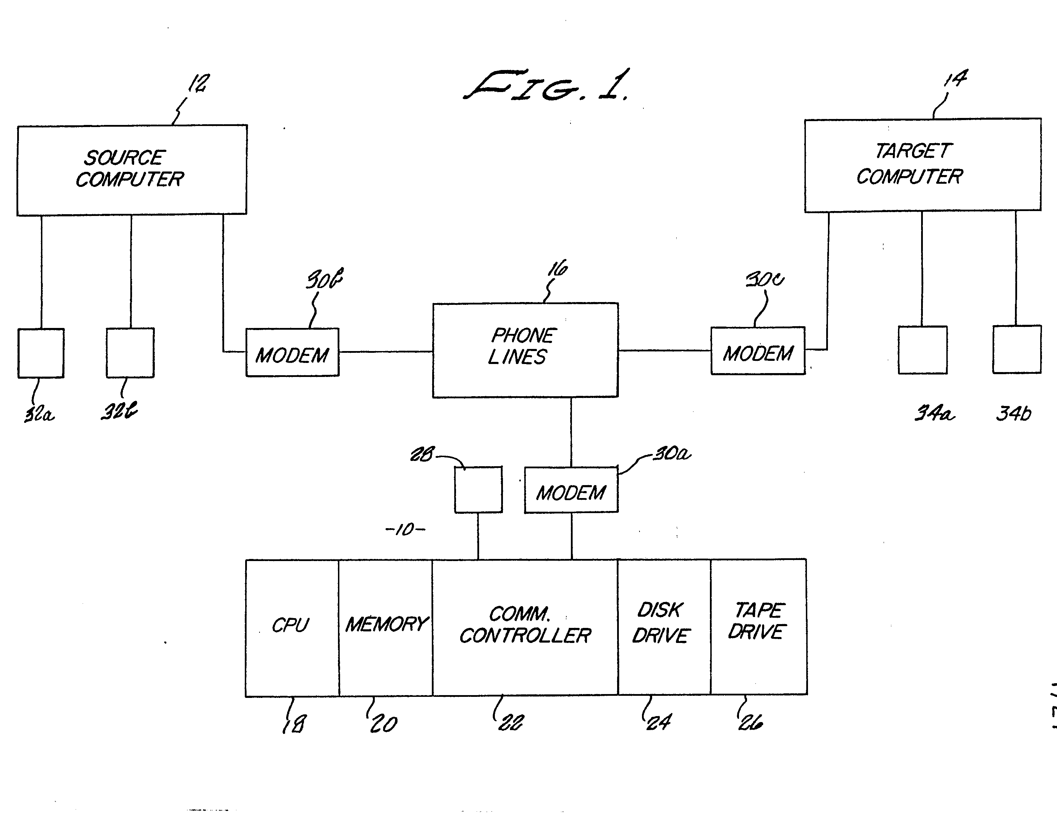

Referring to Figure 1, a transcription computer 10 is used to transfer data from a source computer 12 to a target computer 14 through phone lines 16. The transcription computer 10 has a conventional architecture comprising a central processing unit (CPU) 18, memory 20, communications controller 22, disc drive 24, tape drive 26 and a video terminal 28. Most types of general purpose computers can be used as the translating computer 10.

The present preferred embodiment uses a Plexus computer part No. P25 as the transcription computer 10. The video terminal 28 of the transcription computer is used as a virtual terminal for the source computer 12 and target computer 18. This video terminal 28, which is also used as the operating terminal for the transcription computer 10, is a Televideo Inc. video terminal part No. 970, though many standard video terminals can be used. The transcription computer 10 uses a "UNIX" operating system Revision 3 by Interactive Systems Inc. and an "INED" version 3.1 editor, though the transcription computer may use different operating systems and editors.

The transcription computer 10 uses a communications controller 22 which connects to a modem 30a as is well known in the art. The communications controller 22 of the transcription computer 10 has hardware that permits communication of data of the source computer 12 and the target computer 14 to be routed through the modem 30a. The source computer 12 connects to a modem 30b and the target computer 14 connects to a modem 30c. These modems 30 are compatible in terms of baud rate, parity, start and stop, etc. so as to communicate to each other as is well known in the art.

The source computer 12 is connected to operator terminals 32a and 32b and the target computer 14 is connected to terminals 34a and 34b. In Figure 1, two pairs of terminals 32 and 34 are depicted for example only and the present invention does not depend on any specific number of terminals. The terminals 32 are used by operators of the source computer 12 so as to execute application programs on the source computer 12.

Likewise, operators of the target computer 14 use the terminals 34 to execute application programs of the target computer 14. The terminal 28 is referred to as a virtual terminal because the source and target computers 12 and 14 will respond to the virtual terminal 28 as though it were a terminal 32 or 34, respectively, during the practice of the present invention.

The transcription computer 10 uses a transcription program which is a general purpose program used for transporting data from the source computer 12 to the target computer 14. This program comprises a plurality of sub-programs.

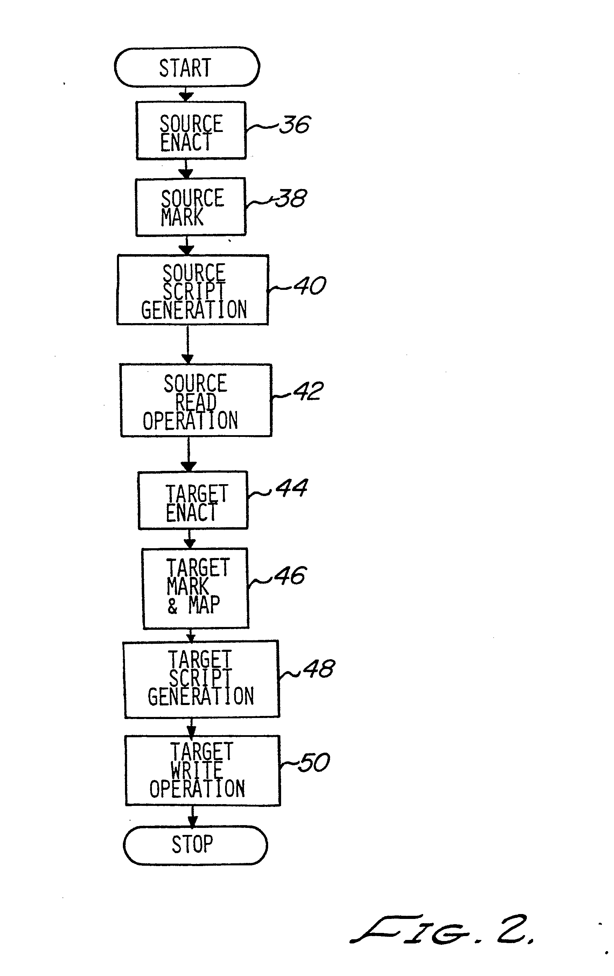

Generally and referring to Figure 2, the transfer process is as follows. The transcription computer 10 communicates with the source computer to read a few records during a enact source session 36 so as to gain knowledge of the format of those records. The prompts and responses of the enact source session are marked 38 for script generation. Then, a list of all the records to be transferred is used to generate a source script 40 which script includes expected prompts of the source computer 12 and respective responses thereto which responses cause the source computer 12 to transmit all of the records in sequence so as to be read 42 by the transcription computer 10. The transcription computer 10 then communicates with the target computer 14 during an enact target session 44 so as to enter example data into a few record so as to gain knowledge of the format of those records. Next, the data in the records transmitted by the source computer 12 is marked and mapped 46 to expected prompts of the target computer 14 which prompts request data. Another script is generated 48 which lists in sequential order the expected prompts of the target computer 14 and their respective responses, which responses are the data transmitted by the source computer 12. The responses of this script are transmitted in sequential order and written 50 to the target computer 14 in response to the expected prompts, thereby transferring all of the data transmitted by the source computer 12.

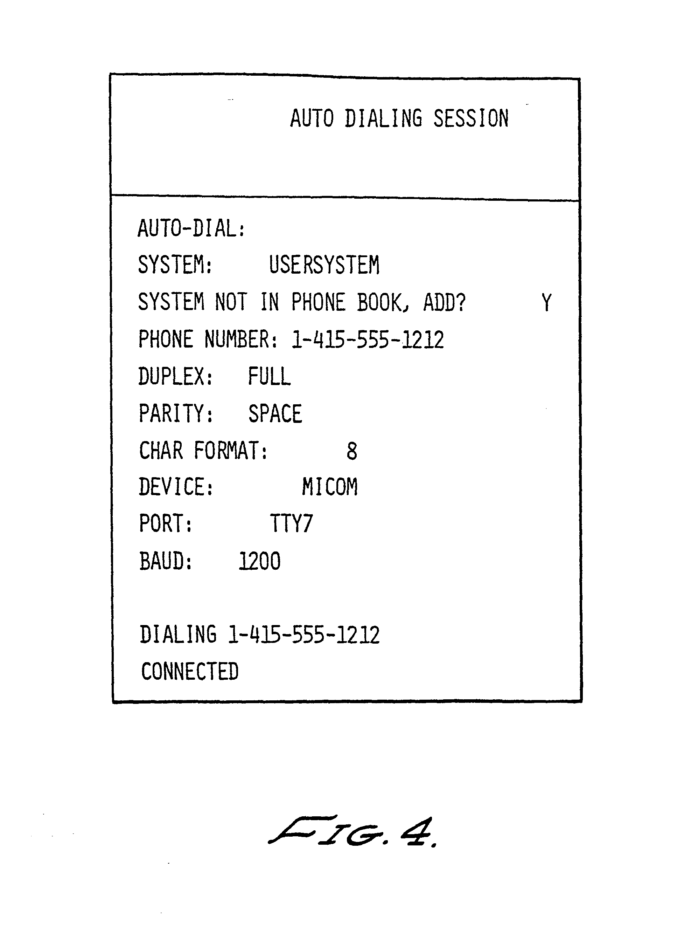

Referring to Figures 4 through 20, the files and displays used during the transcription process are depicted, and the execution of the transcription process steps as described by way of an example referred to hereinafter as the present example or simply as the example. The teaching of the present preferred embodiment is better realized and understood through an explanation of the present example that is illustrated in Figures 4 through 20. The transcription process comprises ninety nine detailed process steps which are listed in short form at the end of this specification. Unless otherwise instructed, at the completion of any one of the process steps, the process flow naturally continues to the next process step in numerical order. The process steps are now discussed in detail and in numerical order while referring to the present example and the step discussions are as follows:

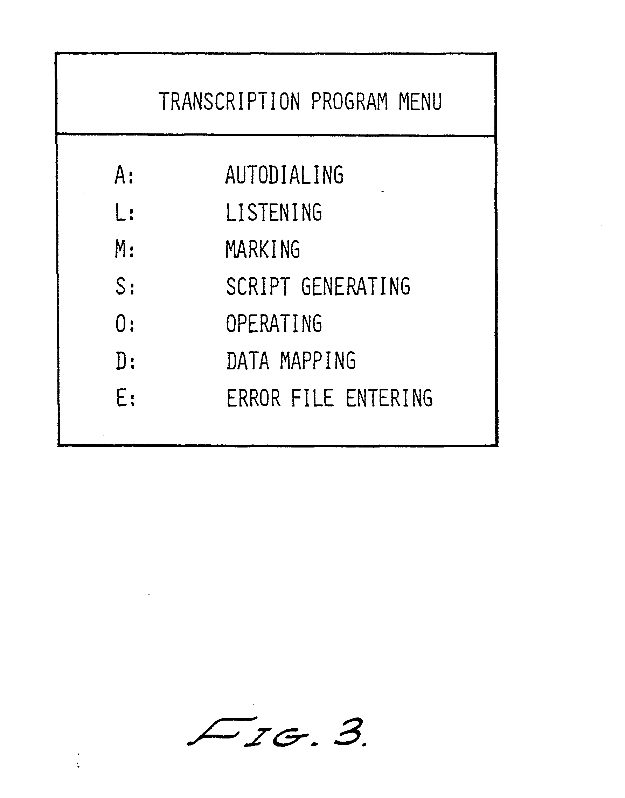

STEP 1. The operator at the virtual terminal selects and executes the transcription program on the transcription computer. Referring to Figure 3, the transcription menu appears now on the virtual terminal and will appear at various times during the practice of the present invention. The menu comprises seven options referring to seven sub-programs and they are: A for autodialing; L for listening to a session; M for marking data within source enact files; S for script

generating; O for operating the scripts; D for data field mapping; E for error file entering;

STEP 2.  The menu of the transcription program is displayed on the virtual terminal transcription computer.

STEP 3.  The physical link between the transcription computer and both the source computer and the target computer is made by connecting the three computer systems to their respective modems so as to permit communications between the transcription computer and either the source or target computer.

This requires that a terminal port at both the source computer and target computer be available and a modem attached at each of the ports, and these modems in turn are attached to the phone lines.  The transcription computer is also connected to a modem that is in turn connected to the phone lines so that all three computers can now communicate over the phone lines.  This modem connection permits the transcription computer to be placed at a predetermined location provided that it has phone line access.

STEP 4.  The operator selects the A option of the transcription menu for selecting and executing the autodialing program.  The autodialing program is a program of the transcription program.  The autodialing program causes the electronic dialing of a phone number of either the source or target computer, as is well known in the art.

STEP 5.  Upon selecting the A option, the autodialing program is invoked.  Referring to Figure 4, the autodialing program prompts the operator at the virtual terminal to enter parameters used by the autodialing program such as the user system, that is, the name of the system to which the transcription computer is to communicate to. If the user system is not within a phone directory of the autodial program, as is well known in the art, then the autodial program will prompt the operator to ask if the system name should be added to the directory. A YES response is responded by a prompt asking for the phone number. Here, for example, the phone number 1-415-555-1212 is used. The autodialing program then prompts the operator to specify parameters such as duplex mode, parity, the character format, the device type, which is the modem type; the port, which is one of a plurality of ports of the communications controller, and the baud rate. After entering this data, the autodialing program dials the number and here, for example, 1-415-555-1212 is used.

STEP 6. Upon conclusion of entering the last autodial parameter, that is the baud rate, the autodialing program of the transcription program automatically executes an autodial process. This process causes a TTY port of the communications controller to be selected which is where the modem is connected. The modem causes the phone number to be transmitted on the phone lines so that the source computer is dialed. The modem of the source computer will respond with a high frequency signal which is recognized by the modem of the transcription computer thereby referencing a connected condition. Consequently, a logical link between the source and transcription computers is established, as is well known in the art.

STEP 7. If the logical link is not established for some reason, for example, the phone line was not connected properly or that the modem of the source computer is already in use, then the logical link is not established. Whether or not the logical link is established, the autodialing program is automatically terminated. If the logical link was established then jump to STEP 9, otherwise, continue.

STEP 8. In the event that the logical link was not established, a message is displayed informing the operator that the logical link was not established. The menu of the transcription program is displayed automatically. Jump back to STEP 4 to repeat the dialing process to establish the logical link, and if after several attempts there is not an establishment of the logical link, then the operator should check to make sure that all of the modems are properly connected and that they are all set at predetermined parameters and so forth as is well known is the art.

STEP 9. In the event that the logical link was established, that is, the modem at the source computer responded correctly to the dialing process, then a connected message will be displayed on the virtual terminal and then the menu of the transcription program is subsequently displayed.

STEP 10. With the logical link established between the source computer and the transcription computer, and with the transcription program menu being displayed on the screen of the virtual terminal, the operator selects the L option for selecting and executing the listening program of the transcription program.

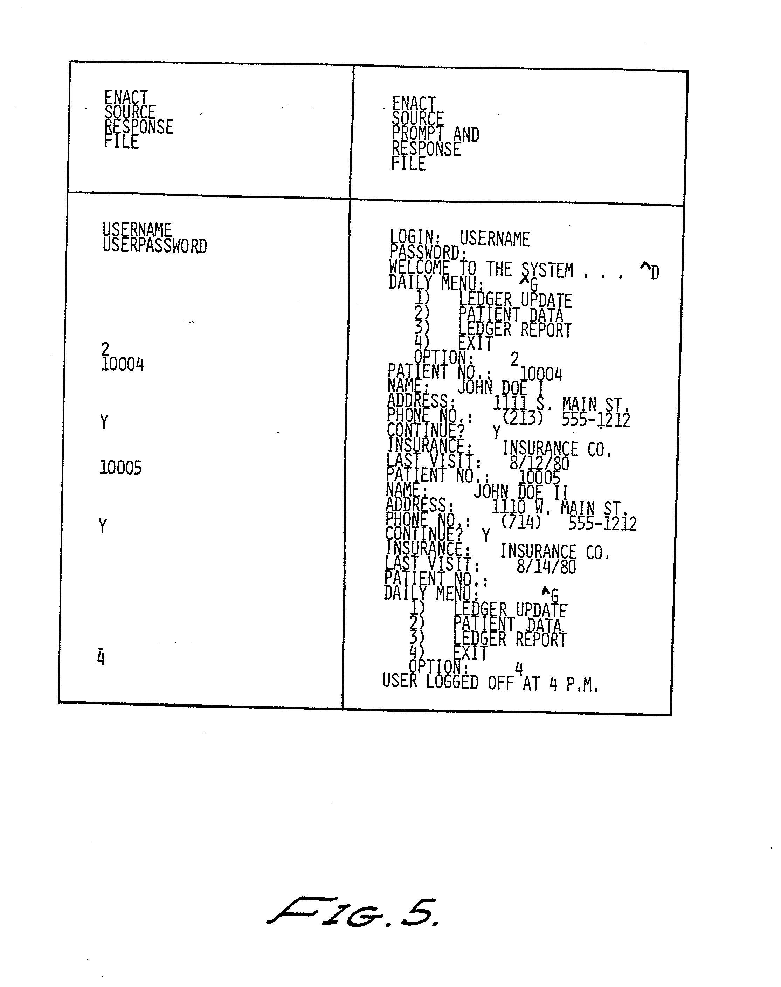

STEP 11. Referring to Figure 5, by way of example, an enact source session is now enacted during which log-on, record calling and log-off occurs during which enact source session, the transcription of data occurs in the transcription computer. As data is transferred between the source computer and the virtual terminal through the transcription computer, the listening program causes the data that is transferred to be stored in the memory of the transcription computer. This data is stored into the memory of the transcription computer as files, thereby, recording the enact source session. The data which is transferred between the virtual terminal and the source computer is transcribed into two separate files. One file is the responses that were entered on the virtual terminal of the transcription computer and the other file is of both the prompts of the source computer and the responses of the transcription computer.

The username response is recognized by the source computer which in turn prompts with the password prompt. The operator at the virtual terminal enters in the userpassword. The userpassword is not echoed back for security reasons as is a standard practice in the art. Now, after log-on, the source computer will allow the operator access to its application programs. A doctor's office manager application program, of this example, prompts the operator with a welcome-to-the-system prompt followed by a user menu comprising ledger update, patient update, ledger report and exit options. This prompt is prompting the operator to select one of the four items of this user menu. The operator selects option 2 which is the patient data option, which recalls data stored in records. The source computer then prompts the operator for the patient number which selects a record. The operator enters 10004 thereby requesting the data of record 10004. Data of the patient with an account number 10004 is then displayed on the virtual terminal. The record comprises patient number, name, address, phone number, insurance, last visit format data and their respective raw data. The format data consists of patient number, address, phone number and last visit, whereas, the raw data comprises 10004, John Doe I, 1111 S. Main St., (213) 555-1212, insurance co. and 8/12/80. The raw data responses are variable recurring responses. The Y response is an invariable recurring response whereas username, userpassword, 2 and 4 user menu responses are non-recurring responses. The two control-G and the control-D characters are used as examples of special control characters that the source computer may use during the application program, for example, these control characters may have been used by the terminal of the source computer to display high intensity characters so that data characters are highlighted and distinguished for the operator's convenience.

The operator repeats the recall of a second record as mere convenience in an attempt to gain an understanding of the types of prompts and responses and an understanding of the recursiveness and variability of the prompts and responses. Hence, another record is retrieved. The patient number 10005 is entered. After each entry, which at times may be no entry, the operator strikes the carriage return to inform the source computer that the number or data, if any, has been entered as is well known in the art. After reading a couple of records, the operator then selects option 4 and a log-off of the source computer occurs thereby completing the enact source session.

STEP 12.    When the operator responded with a 4 during the enact source session, a log-off occurred and log-offs are well known in the art.    This log-off, which causes a disconnect of the logical link between the source and transcription computers, is sensed by the communications controller which in turn interrupts the transcription program to cause it to exit the listening program and return to the transcription program whereby the menu of the transcription program is automatically displayed.

STEP 13.    The operator then selects the M option to select and execute the marking program for marking the responses of the enact source response file and for marking prompts and responses of the enact source prompt and response file, and these files were transcribed during the enact source session.    During the enact source session, the enact source response file and the enact source prompt and response files are written into the memory of the transcription computer and are now available for marking.    The M option causes the enact source response file and the enact source prompt and response file, which files are depicted by way of example in figure 5, to be displayed upon the screen.

STEP 14.    The transcription program automatically selects and executes the split screen editor whereby both the enact source response file and the enact source prompt and response files are displayed together on the screen so that visual comparison can be had between these two files.

STEP 15.    Once the enact source response file and the enact source prompt and response file are displayed upon the screen, the transcription program automatically searches through both of these two files looking for control characters that might have been used during the enacted source session If there are any control characters that were used, then, these control characters are made unavailable for marking of the enact source response file and the enact source prompt and response file.

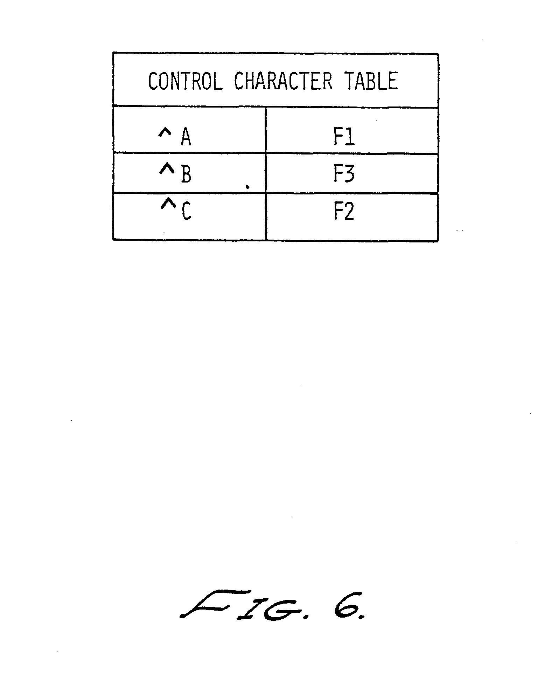

Referring to Figure 5 and Figure 6, the control-D character and the control-G character were used during the enact source session; therefore, the control-D character and the control-G character are not available for subsequent marking. Again, by example, control-D and control-G characters are used as an example. Control characters are referenced . by an up arrow caret as shown in the Figures.

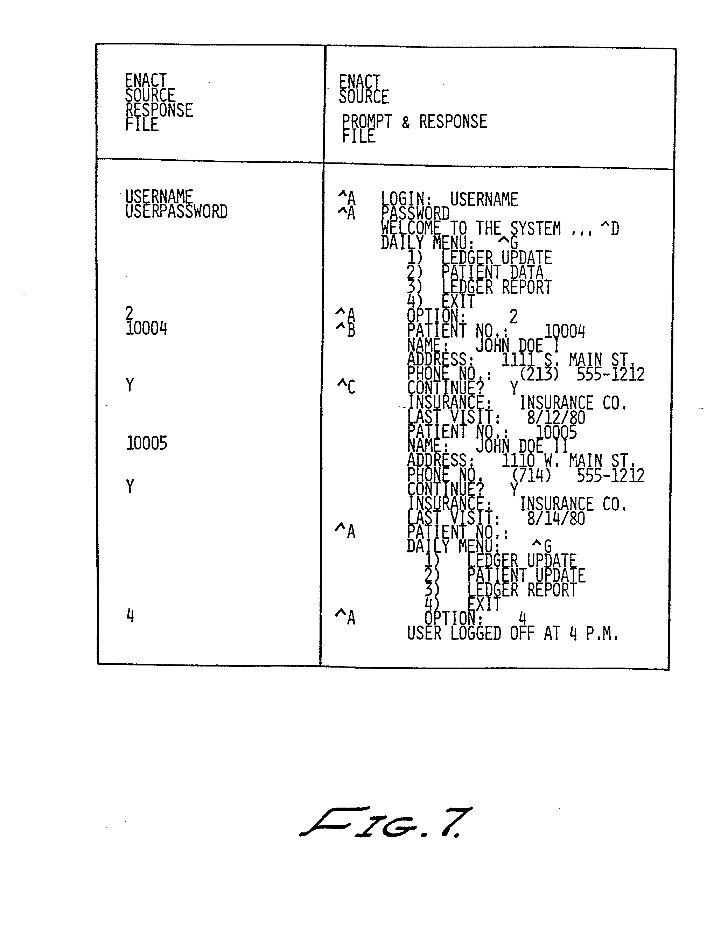

STEP 16. Referring to Figure 6 and Figure 7, the operator now marks the enact source prompt and response files. The operator moves the cursor of the virtual terminal over the beginning character of various prompts of the enact source prompt and response file. At the beginning of each prompt to be marked, the operator strikes either the F1, F2, or F3 special function keys so as to mark and reference the beginning of the prompts. Any arbitrary set of keys can be used for marking and these special function keys are standard on keyboards of most video display terminals.

The first prompt to be marked is the log-in username prompt. By striking the F1 function key, the control-A character is placed to the right of the log-in username prompt because the control-A character is the first available control character. Simultaneously, an entry is made into the control character table. The F1 function key is now associated with the control-A character.  The F1 function key is used for marking non-recurring responses such as username, password, 2, carriage return after the patient number prompt when no more records are desired, and lastly, 4.

The F2 special function key is used for marking recurring prompts that have non-variable responses such as the continue prompt with the Y non-variable response.

The F3 function key is used for marking recurring prompts with variable responses.  It should be noted that the term "recurring" is used here to mean that the data base to be transferred comprises a plurality of records and each of the records have format data that is used in each record, and thus, the prompt recurs as the records are sequential read from the source computer.

Referring to Figure 7, the patient no. is a prompt with which a variable recurring response is associated, such as 10004, or 10005 variable recurring responses.  However, the continue prompt, which has an invariable response Y, is a prompt to which there is an invariable response and this Y response is also a recurring response.

After marking the username prompt with the F1 func-

tion key from which marking, a control-A character will be shown on the screen and the operator moves the cursor downward to the next prompt that is to be marked.  The next prompt is a password prompt which is a non-recurring prompt.  Therefore, a

F1 function key is likewise struck.  The F1 function key causes

the control-A to be inserted in front of the password prompt.

The operator then moves the cursor down to the next prompt which in this example is the option prompt. Option prompt is a non-recurring prompt to which the operator likewise strikes the F1 function key and the control-A character is displayed on the screen in front of the option prompt.

The operator then moves the cursor down to the next prompt and that prompt is the patient no. prompt. The patient no. prompt is a recurring prompt in that it re-occurs for each record read from the source computer.

The response to the patient no. prompt is a variable recurring response, in that, the response changes for each record read. The F3 function key is struck causing the control-B character to be inserted in front of the patient no. prompt of the enact source prompt and response file, and the F3 function key is now associated with the control-B character in the control character table.

Next, the operator moves the cursor down to the continue prompt. The continue prompt is a recurring prompt with a non-variable response. Consequently, the operator strikes the F2 function key thereby marking this non-variable recurring response. A control-C character is inserted in front of the continue prompt and the control-C character is associated with the F2 function key in the control character table. The operator now realizes that the next patient record, e.g., John Doe II, is encountered. Thus, the operator has successfully marked the recurring prompts of a record of the enact source prompt and response file.

The operator then moves the cursor down to the next non-recurring prompt. That prompt is the last prompt of the patient no. prompts. The operator then strikes the Fl function key which is used for marking non-recurring prompts, and the control-A character is displayed on the screen. A carriage return in this example is the response to the last patient no. prompt because it by itself and without data, instructs the source computer to return to the user menu so as to not read another record.

The control-G and control-D control characters are not used because there were unavailable when previously used in the enact prompt and response file and because control-A, B and C control characters were available.

The operator then moves the cursor down to the next non-recurring prompt. That prompt is the option prompt. The operator should strike the Fl function key which is used for marking non-recurring prompts and the control-A character is displayed on the screen.

The operator has now successfully marked the enact source prompt and response file.

STEP 17. Upon conclusion of marking the recurring prompts of the first record and all the non-recurring prompts both of which are in the enact source prompt and response file, the operator strikes a special function exit key to exit the editor and marking program to return to the transcription program.

STEP 18. The transcription program displays the transcription menu on the virtual terminal.

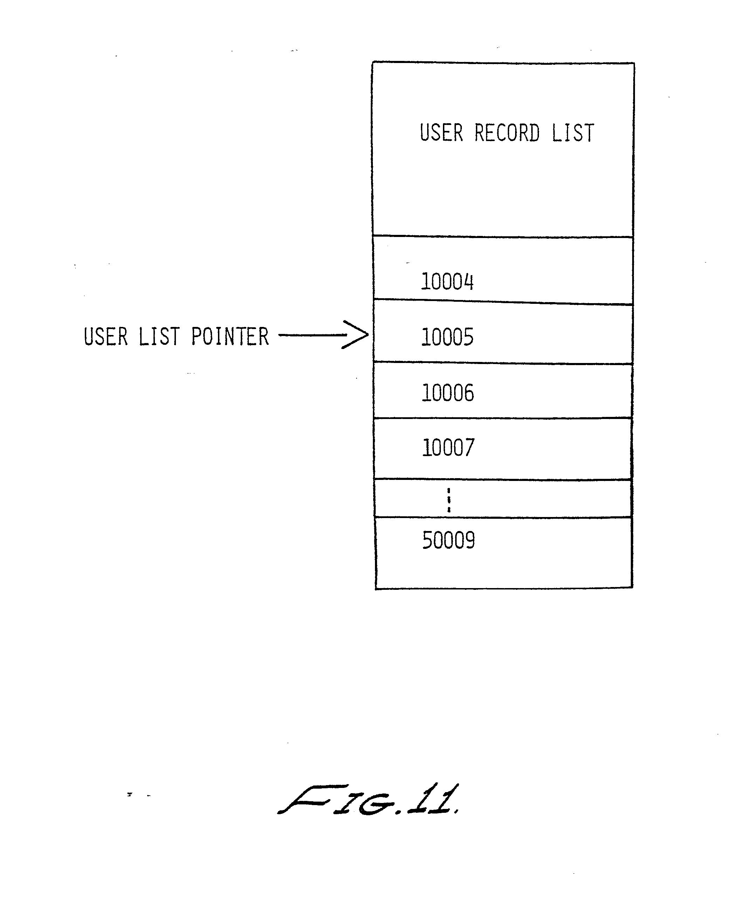

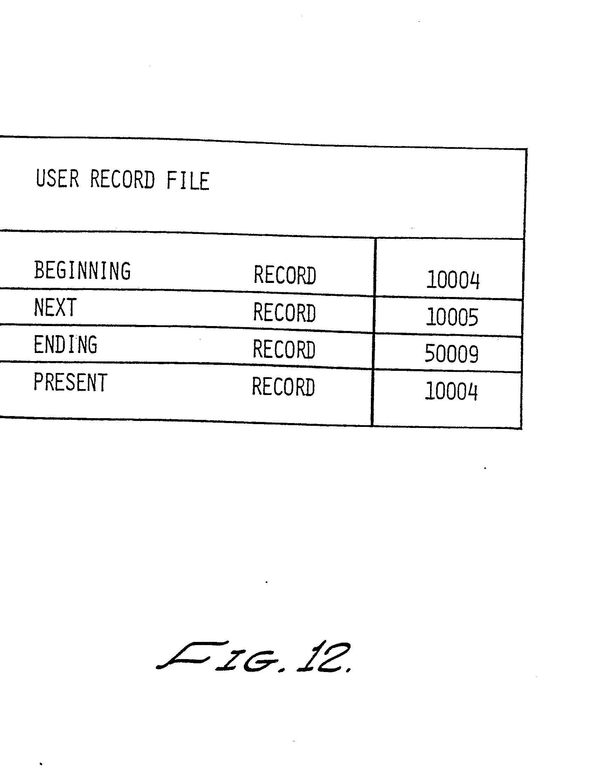

STEP 19. Referring to Figure 11 and Figure 12, the source computer application program data base comprises of a plurality of records, which records are typically referenced by a name. The user record list or the user record file is now entered into the transcription computer. The user record list or the user record file is used to specify which records of the data base of the application program of the source computer are to be used as source records from which raw data is to be transferred to the target computer.

In the example of the Figure 7, the names 10004 to 50009 are used. These records are named with numbers and are to be read in sequential numeric order during execution of the operating program which uses a generated script. However, the user of the source computer could supply a list of named records as a subset of all the records in the user's data base. This user record list needs to be loaded into the transcription computer as a file. This list can be transported or communicated through the modems to the transcription computer. The user record list can also be entered manually or it can be entered on magnetic tape through one of the tape drives of the transcription computer as these practices are well known in the art.

The tape drive and the user record list present a compatibility problem, but at some point, the user must specify which records are to be transferred, and such specification must be in a form in which the list can be used by the transcription computer. This specification is unavoidable because the record list must be defined so as to determine the scope of the data transfer desired.

An alternative to using a user record list is to enter a user record file. The user record file comprises a beginning record name, a next record name, an ending record name and a present record name. Under program control, the transcription program, and more specifically, the script generating program, can read the beginning record name and next record name and determine what is the difference between them. If the records desire are named by a numerical listing such as account numbers of the present example, (e.g. 10004 is the first account number and 10005 is the next account number) then, the difference between them is a number, (e.g. one). This difference is used by script generating program so as to increment the account number when reading the consecutive account records. Thus, the script generating program causes the present account number, i.e. the present record name, to be incremented by the difference between the beginning account number and the next account number so as to then read the next record. The records are read in order until present account number equals the ending account number.

Many different algorithms can be employed for automatic listing and reading of records of the data base of an application program of the source computer. Algorithms for generating sequential alphanumeric characters can be used instead when the records are named with alphanumeric characters.

STEP 20. With the transcription program menu being displayed, the operator at the transcription computer selects the S option thereby selecting and executing the script generating program.

STEP 21. The script generating program prompts the operator at the virtual terminal of the transcription computer to specify a source file which specifies the records wherein raw data is stored, and which raw data is to be transferred from the source computer to the target computer. The source file can be either the user record list or the user record file. After specifying which source file is used, the script generating program then generates the script. The script generating program generates the script as described in the following STEPS 22 through 40.

STEP 22. The script generating program opens a script source response file and a script source prompt file.

STEP 23. The script generating program then scans the enact source prompt and response file searching for control characters.

STEP 24. Upon recognition of a control character in the enact source prompt and response file, the script generating program then examines the control character table to determine what type of prompt is associated with the presently recognized control character. The function keys are mapped to the control characters in the control character table. If the associated function key is a F1 function key, then continue. If the presently recognized control character is mapped to an F2 or F3 function key then jump to step 26. If the presently recognized control character is not found in the control character table then jump back to STEP 23.

STEP 25. Having found a control character that is mapped to a F1 function key, the script source response file and the script source prompt file are now appended. This occurs by entering the response in the enact source response file associated with the presently recognized control character. The prompt associated with the presently recognized control character is now appended to the script source prompt file. Now, jump to STEP 23.

STEP 26. Having found a control character that is mapped to a F2 or F3 function key, the script generating program determines if it is mapped to a F3 function key. If the presently recognized control character is mapped to a F3 function key then jump to STEP 29. If the presently recognized control character is mapped to a F2 function key, then continue.

STEP 27. Having found a control character that is mapped to a F2 function key in the control character table, the script generating program takes the response in the enact source response associated with the presently recognized control character and enters that response into the script source response file. Concurrently, the script generating program reads the prompt associated with the presently recognized control character in the enact source prompt and response file and appends that prompt to the script prompt file.

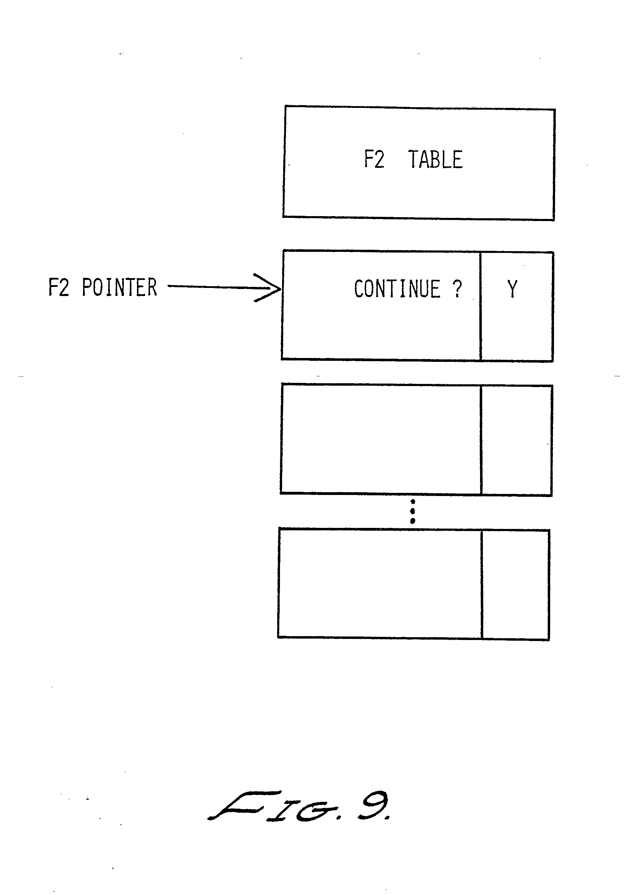

STEP 28. The response and prompt generated in STEP 27 are also appended in sequential order to the F2 table. An example of the F2 table is depicted in Figure 9. In the example, there is only one F2 type prompt. Therefore, in the present example, there is only one entry in the F2 table. However, some records of other data bases may have a plurality of recurring invariable responses to recurring prompts. In such a case, which is not the case of the present example, a F2 pointer is used to point to the current F2 entry. The F2 table is used for storing recurring prompts with invariable responses in order as they appear in a record. After entry into the F2 table, this process then jumps to STEP 30.

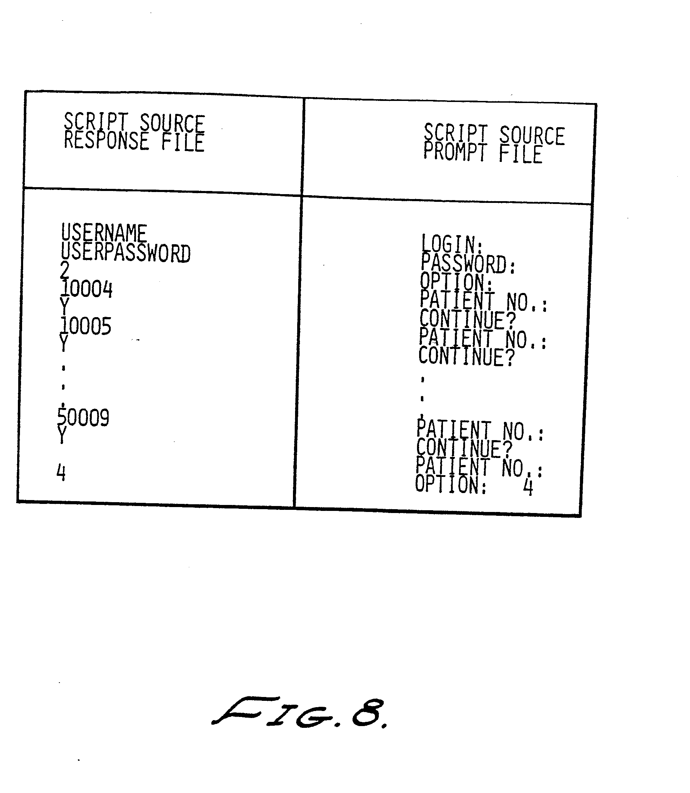

STEP 29. Having found a control character that is mapped to a F3 function key, the response to be appended to the script source response file is a variable response, that is, it changes from record to record. The script generating program will derive from either the user record list or the user record file this next variable response. In the case of the user record list, the user list pointer is used to sequentially point through the user record list. In the case of the user record file, the present record is the response. The script generating program reads the response from either the user record list or the user record file and appends it to the script source response file, and an example of the script source response file is depicted in Figure 8.

Next, the script generating program appends the prompt associated with the presently recognized control character. That prompt is stored for later use as the F3 prompt. The example record used has only one recurring prompt with a variable response. However, other data bases may have records with a plurality of different prompts with respective variable responses. In such a case, a user record list or a user record file would be needed for each different prompt that has a variable response.

There would also be required a F3 table similar to that of the F2 table of Figure 9. This F3 table would have an entry for each type of F3 prompt. The corresponding entry of that table would not be of a specific response as in the F2 table, but would reference one of the plurality of user record lists or user record files wherein the variable responses are derived.  In the present example, the F3 prompt is simply stored in memory and read when needed.

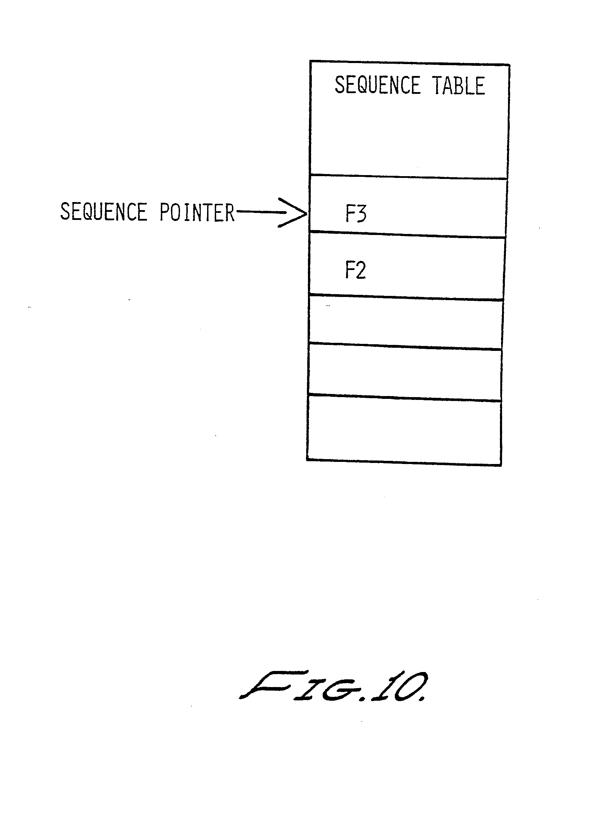

STEP 30.  After the prompt and response associated with the presently recognized control character mapped to either an F2 and F3 function keys, are appended to the script source response file and script source prompt file, respectively, the script generating program then appends a sequence table with either an F2 or F3 type entry depending upon the type of prompt while a sequence pointer is incremented.  An example of the sequence table is depicted in Figure 10.

The sequence table of Figure 10 is used as a means to automatically generate recurring prompts and their associated non-variable and variable responses within each record. During automatic script generation while using the sequence pointer, the script generating program cycles through the sequence table so as to compile the script comprising the script source response file and script prompt file as depicted by way of example in Figure 8.

STEP 31.  The script generating program then scans for the next control character.

STEP 32.  If the presently recognized control character is mapped to a F2 or a F3 function key then, jump to STEP 26.  If the presently recognized character is not mapped to a F1, F2, or F3, jump to STEP 31.  If the presently recognized character is mapped to a F1 function key, then continue.

STEP 33.  Increment the sequence pointer of the sequence table of which an example depicted in Figure 10. However, if the sequence pointer is at the last entry of the sequence table, then do not increment the sequence pointer, but set the sequence pointer to the first entry of the sequence table, and read from the sequence table the entry now pointed to by sequence pointer. If this entry is a F2 type entry, then continue. If this entry is a F3 type entry, then jump to STEP 35.

STEP 34. Since the sequence pointer of the sequence table is now pointing to an F2 entry, increment the F2 pointer of the F2 table unless the F2 pointer is presently pointing at the last entry of the table. If the F2 pointer is presently pointing at the last entry of the F2 table then set the F2 pointer to the first entry. Then, read from the F2 table the response and prompt pointed to by the F2 pointer and append this response and prompt into the script source response file and source script prompt file, respectively. Then, jump to STEP 36.

STEP 35. Since the sequence pointer of the sequence table is now pointing to a F3 entry, a variable response and its associated recurring prompt needs to be derived and appended to the script source response and script source prompt file, respectively.

A user list pointer points to the last used entry of the user record list. If the user record list is used, increment the user list pointer. Now, append the variable response pointed to by the user record list pointer of the user record list to the script source response file.

If the user record file is used, go to the user record file and increment the present record name by the incremental difference. This incremental difference is the difference between the beginning record name and next record name. Now append the present record name into the script source response file. Now, append the F3 prompt to the script source prompt file.

STEP 36. If the user record pointer is at the end of the user record list when the user recorded list is used, or, if the present record equals the ending record when the user record file is used, and, in either case, the sequence pointer is at the end of the sequence table then jump to STEP 38. Otherwise, jump to STEP 33.

STEP 37. Scan for the next control character. If none are remaining in the enact prompt and response file, then jump to STEP 40.

STEP 38. If the presently recognized control character is not mapped to a F1 function key then jump to STEP 37, otherwise continue.

STEP 39. Since the presently recognized control character is mapped to a F1 function key, read the response from the enact source response file associated with the presently recognized control character and append that response to the script source response file. Additionally, read the prompt from the enact source prompt and response file associated with the presently recognized control character and append that prompt to the script source prompt file. Then, jump to STEP 37.

STEP 40. When scanning sequentially down the enact source prompt and response file, the end of the enact source prompt and response file is eventually encountered. When this occurs, the script generating program is finished generating the script source prompt and response files. The transcription program is now selected and the menu displayed.

STEP 41. Select the E option of the transcription program menu for selecting and executing an error file entering program and the split screen editor.

STEP 42. The operator creates an error source response file and an associated error source prompt file. During the actual transfer of records from the source conputer to the transcription computer, the operating program awaits a prompt which is expected. This expected prompt is the next prompt in sequential order as the prompts were appended in the script source prompt file. When the expected prompt is received from the source computer, its associated response in the script source response file is sent to the source computer and then the next expected prompt is awaited. In this manner of the waiting for expected prompts and sending their respective response, the source computer transfers records the data base of the application program.

However, due to unusual circumstances, the sequence may be interrupted by an erroneous transient condition. The operating program may encounter an unexpected prompt which is a prompt but not the next one in the script source prompt file. The error source response file and the error source prompt file in part provide an effective manner of recovering from this unusual circumstance. In such a circumstance, the operating program would search the error source prompt file for the unexpected prompt that was received. When found, the operating program would then read the associated response in the error source response file. This response is sent to the source computer while another return prompt is awaited by the transcription computer. If the returned prompt is the expected prompt, then the operating program continues processing through the script source prompt and response file thereby transferring the data base. If the return prompt is again not the expected prompt then another associated error response is again sent to the source computer from which another prompt is again awaited. After several unsuccessful attempts to receive the expected prompt, a terminal error has occurred.

If the return prompt is not in the error source prompt file then a terminal error has occurred. If no prompt is returned within a time-out period then a terminal error has also occurred. The operating program will abort upon the recognition of a terminal error.

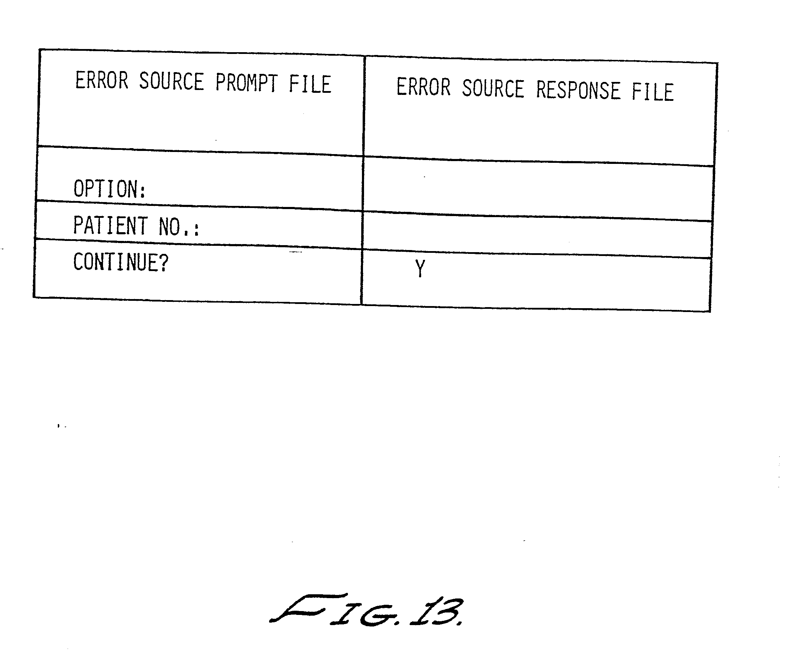

STEP 43. On entering the error source response file and the error source prompt file, an example of which is depicted in Figure 13, the operator strikes a special function exit key to exit the error file entering program. It should be noted that in the error source response file where there is no entry, the entry is actually a carriage return which is transmitted after every prompt or response as is well known in the art. There, a null or empty response is transmitted by transmitting only the carriage return to the source computer.

STEP 44. The transcription program returns to the menu.

STEP 45. Select the A option of the transcription menu selecting and executing the autodialing program.

STEP 46. Enter the autodialing parameters.

STEP 47.   Upon conclusion of entering the last autodial parameter, the autodialing program automatically selects
and executes the autodial process which either establishes or
does not establish a logical link between the source and transcription computers.  If the logical link is not established,
then a disconnect message is displayed.  If the logical link is
established then a connect message is displayed.  The transcription program is selected upon the termination of the autodial
process.

STEP 48.   The menu of the transcription program is
automatically displayed.  If the logical link was not established
then jump to STEP 45, otherwise continue.

.STEP 49.   Select the O option to select and execute
the operating program so to execute a source operating session
using the script source prompt and response files and the error
source prompt and response files.

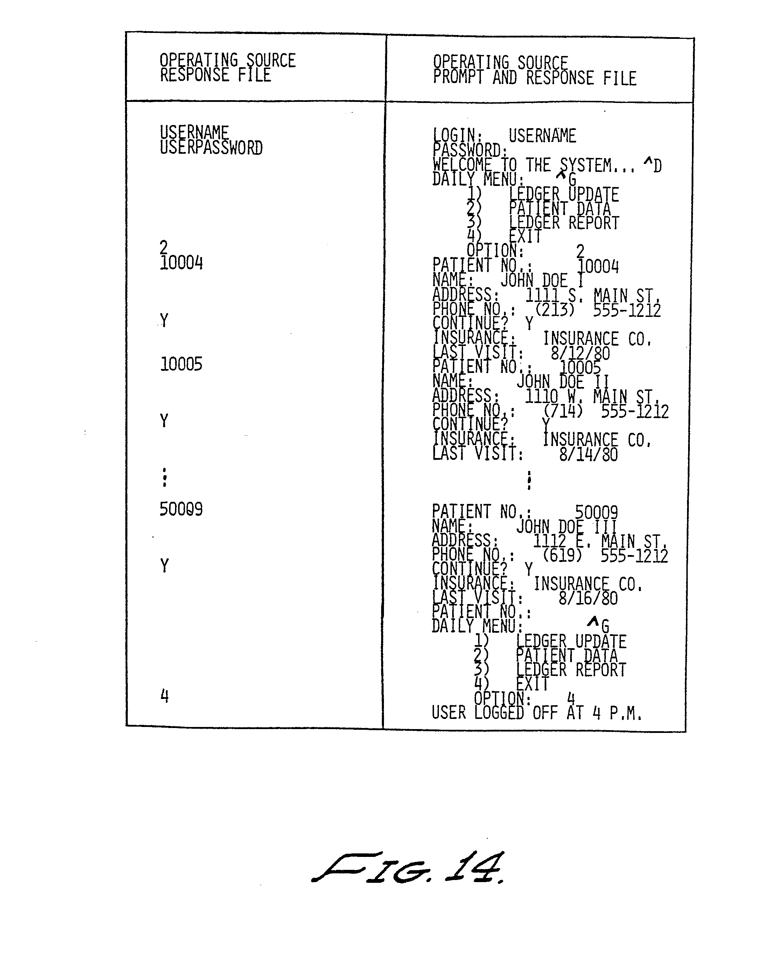

STEP 50.   During the source operating session the
records are transferred from the source computer to the
transcription computer thereby creating the operating source
response file and the operating prompt and response file
both of which are depicted by way of an example in Figure 14.

The process of transferring the data base comprises
receiving expected prompts and returning their associated
responses in order as appended in the script source response
and prompt files until the log-off occurs or an abort from
a terminal error.  If an unexpected prompt is received then
an associated error response is returned.

When the log-off occurs at the natural conclusion of
the orderly transfer of all the responses of the script source response file or an abort has occurred, the operating script session and the operating program terminate.

STEP 51. Upon operating program termination, a message is displayed. In the event of an unnatural termination, that is, an abort has occurred as discussed above, the operating program is aborted with abort message displayed.

If there was a natural termination, an operating-program completed message is display. After display of one of the messages the transcription program is selected and the menu is displayed. If there was an unnatural termination jump to STEP 44, otherwise continue.

STEP 52. Select the A option for selecting and executing the autodialing program.

STEP 53. Enter the autodialing parameters.

STEP 54. The autodialing program is now used to establish a logical link between the target computer and the transcription computer. Upon conclusion of entering the last autodial parameter, the autodial program automatically selects and executes the autodial process which either establishes or does not establish the logical link between the target computer and the transcription computer. If the logical link is not established, a disconnect message is displayed followed by a return to the transcription program.

If the logical link is established, then a connect message is displayed followed by the return to the transcription program.

STEP 55. The menu of the transcription program is automatically displayed. If the logical link was not established then jump to STEP 52. If the logical link was established then continue.

STEP 56.  Select the L option for selecting and executing the listening program so as to execute an enact target session.

STEP 57.  The operator now enacts the enact target session during which log-in, data entry and log-off occurs, and during which enact target session the transcribing of data occurs in the transcription computer, and the data that is communicated between the target computer and the transcription computer is separated into two separate files.  One file is the enact target response file and the other is the enact target prompt and response file.

The purpose of the target enact session is to acquire knowledge as to the data format of the records in the target computer to which is transferred the raw data of the records. The enact source session was for ascertaining the format of the records of the source computer whereas the enact target session is for ascertaining the format of the records of the target computer.  User menu selection during the enact source session was for the reading of records of the source computer whereas user menu selection of the enact target session is for entering data into the records of the target computer.

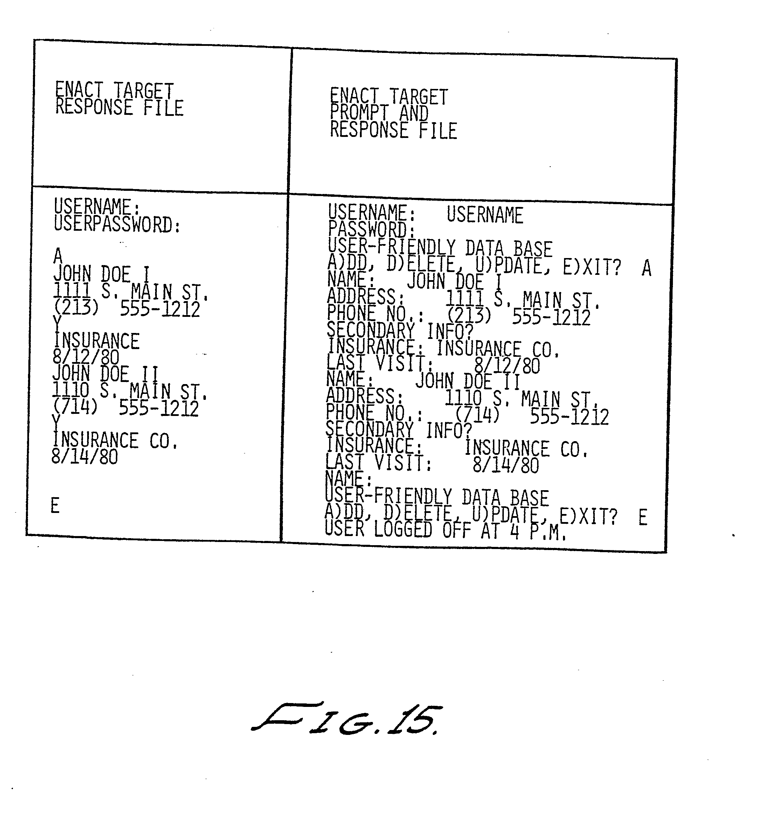

During the enact target session, sample raw data is entered into a few records of the target computer.  An example of the entry is depicted in Figure 15.  The operator executes a log-on, user menu selection, data entry and log-off during the enact target session.

At the completion of the enact target session, that is, upon disconnect during the log-off, the listening program returns to the transcription program.

STEP 58. The transcription program menu is displayed.

STEP 59. Select the D option for selecting and executing the data mapping program which provides for marking and mapping the operating source response and prompt file and the enact target prompt and response file.

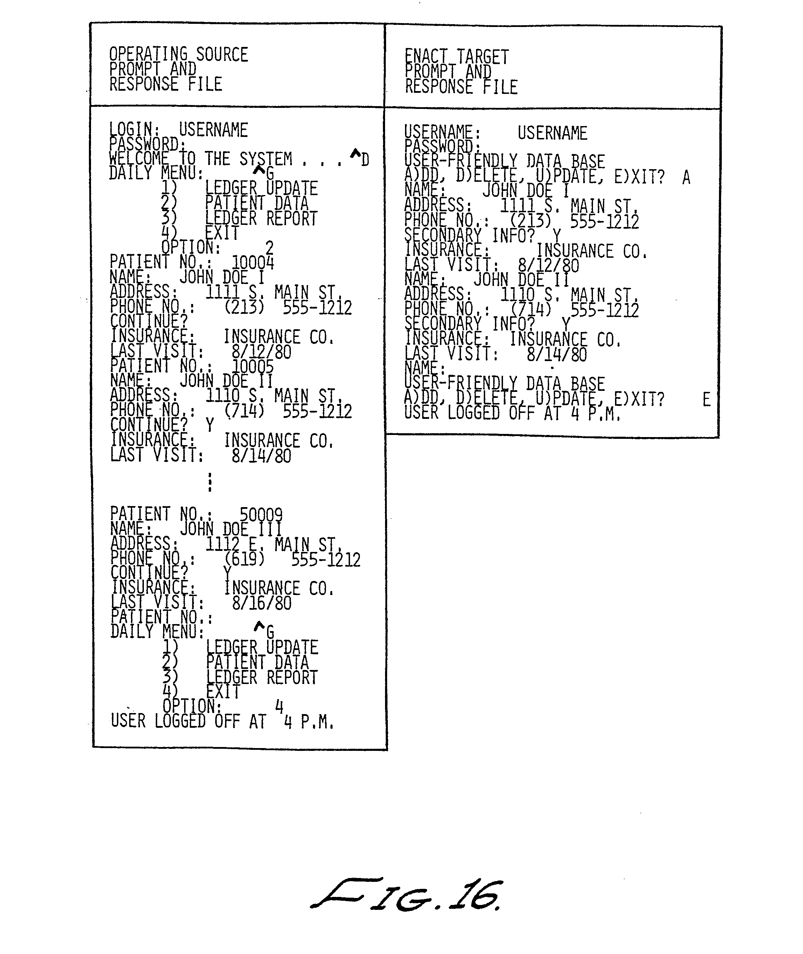

STEP 60. The data mapping program automatically selects and executes the split screen editor with the operating source response and prompt file and the enact target response and prompt file displayed at the virtual terminal for marking and mapping. An example of such display is depicted by way of example in Figure 16.

STEP 61. The data marking program scans the operating source prompt and response file and the enact target prompt and response file for control characters. The control characters found are made unavailable for further processing. In the example depicted in Figure 16, control-G and control-D characters are made unavailable.

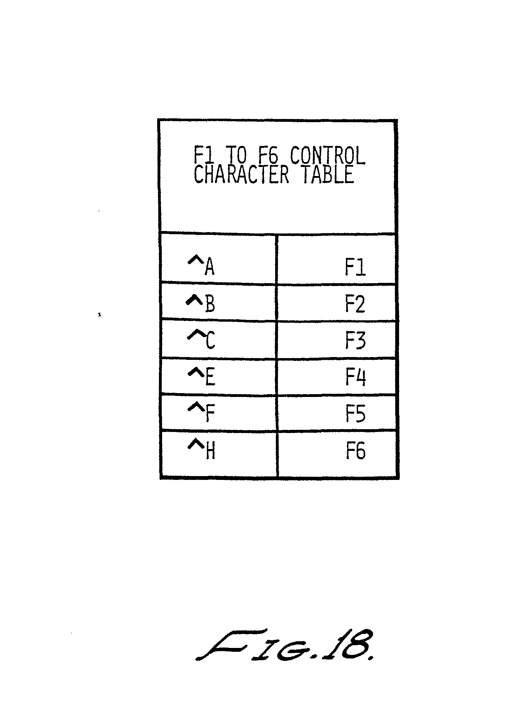

STEP 62. The data mapping program selects the first six available control characters of the control characters starting with the control-A and ending with control-Z. The first six control characters of the available control characters are mapped to special function keys F1 through F6, respectively, in a F1-to-F6 control character table. An example of this F1-to-F6 control character table is depicted in Figure 18 wherein control-G and control-D characters are not used because of their unavailability.

STEP 63. By moving the cursor and striking the F1 function key, the operator now marks all of the nonrecurring prompts. In the present example, control-A character is mapped

to the F1 function key.  Consequently and in the present
example, log-on, user menu, log-off and other non-recurring
prompts are now preceded by a control-A character.

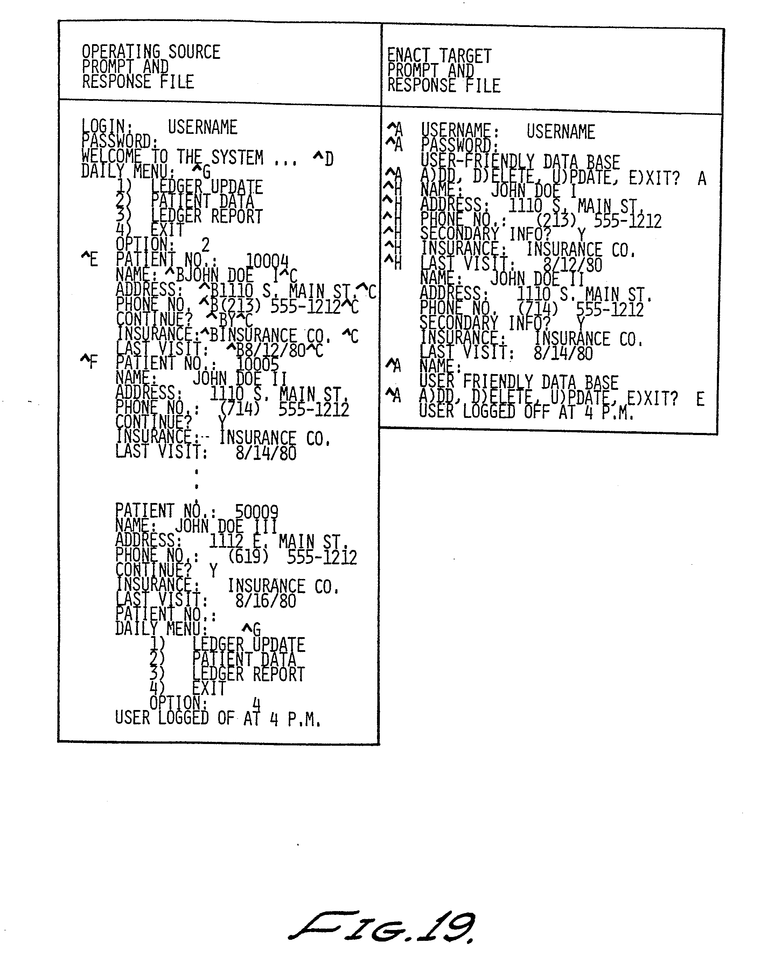

In the present example depicted in Figure 19, the
last of the name prompts is also mark with a control-A character.
A carriage return will be sent in response to this name prompt,
thereby informing the application program of the target computer
to stop data entry and return to the user menu.  Thus, the last
name prompt of the name prompts is a nonrecurring prompt, in
that it is unique from the other name prompts because no data
is responded to it.

STEP 64.  Move the cursor to the first complete record
of the operating source prompt and response file and mark the
first character of the first word of the first prompt of the
first record with the F4 function key.  In the present example
and in Figure 19, a control-E character is inserted before the
patient number prompt because the F4 function key was mapped to
the control-E character in the F1-to-F6 control character table.

STEP 65.  Move the cursor to the beginning of the
second record of the operating source prompt and response file
and mark the first character of the first word of the first
prompt of the second record with the F5 function key thereby
causing the insertion of a control-F character which was mapped
to the F5 function key in the F1-to-F6 control character table.
Consequently, F4 and F5 function keys have now encapsulated the
first record, thereby giving the transcription computer information as to the length of each and every record in the string of
records, wherein raw data is to be transferred to the target
computer.

STEP 66. Move the cursor, to the first character of each of the recurring prompts of the first record of the enact target prompt and response file and mark each prompt with the F6 function key. Upon marking each prompt with the F6 function key, an entry is appended to a F6 target file and this entry is the prompt now associated with the F6 function key. Concurrently with each entry into the F6 target file, the control-H character mapped to the F6 function key in the F1-to-F6 control character table is inserted before the prompts in the enact target prompt and response file. An example of this F6 function key marking is depicted in Figure 19.

STEP 67. The data fields within the first record of the operating source prompt and response file need to be marked so that the data fields can be mapped to their respective prompts of the first record of the enact target prompt and response file, which respective prompts are marked by the F6 function key.

Move the cursor to the first character of each of the data fields that are to be mapped to the respective prompts marked by the F6 function key and mark each of the data fields with the F2 function key thereby causing the insertion of a control character mapped to the F2 function key in the F1-to-F6 control character table. The control character so mapped is inserted before each of the data fields. In the present example, the F2 function key is mapped to a control-B character as depicted in Figure 19.

STEP 68. Move the cursor to the end of each of the data fields that were marked in STEP 67 and mark the end of each data field with the F3 function key, thereby encapsulating the data fields, each of which data fields include raw data to be transferred to the target computer, and thereby distinguishing prompts and the data fields of the first record of the operating source prompt and response file. A control character that was mapped to the F3 function key in the F1-to-F6 control character table, is inserted at the end of each data field of the first record of the operating source prompt and response file upon marking. In the present example, the control-C character is mapped to the F3 function key. Now, the F2 and F3 function keys have marked the data fields each of which fields are encapsulated by the two control characters.

There should now be a mapping between the marked recurring prompt of the first record of the enact source prompt and response file and the marked data fields of the operating source prompt and response file. This mapping is a linear mapping, in that, the first marked prompt is mapped to the first marked data field as is the second marked prompt is mapped to the second data field, and so on. Thus, in the present example of the present invention, each marked prompt has one and only one mapped data field. The order of mapping for both the prompts and the data fields is also a sequentially ordered mapping starting from the beginning of their respective records. Thus, the present invention uses a one-to-one and onto homogeneous mapping though many other mapping methods can be used. For example, a user specified mapping method would provide that the operator specify which data fields are mapped to which prompt so as to provide variable mapping not now practiced in the present invention.

STEP 69. After the operating source prompt and response file and the enact target prompt and response file have been marked, strike the special function exit key to exit the editor and the data marking program so as to return to the transcription program.

STEP 70. The transcription program menu is displayed.

STEP 71. Strike the S option to select and execute the script generating program. The transcription program recorded that the data marking program has just been executed so that the script generating program generates the target script response and prompt files differently than the generation of the source script response and prompt files.

STEP 72. The script generating program scans the enact target prompt and response file searching for a control character.

STEP 73. The control character found is then searched for in the F1-to-F6 control character table to determine what function key is mapped to the presently recognized control character. If the presently recongnized control character is mapped to a F1 function key, then continue. If the presently recognized control character is mapped to a F6 function key, then jump to STEP 75. Otherwise, jump to STEP 72.

STEP 74. Since the presently recongnized control character is mapped to a F1 function key, append the script target prompt file with the prompt associated with the presently recongnized control character in the enact target prompt and response file, while appending script target response file with the response associated with the presently recognized control character in the enact target response file. Then, jump to STEP 72.

STEP 75. If the presently recognized control character is mapped to a F6 function key in the F1-to-F6 control character table, then, continue. If the presently recognized control character is mapped to a F1 function key, then jump to STEP 78. Otherwise, jump to STEP 77.

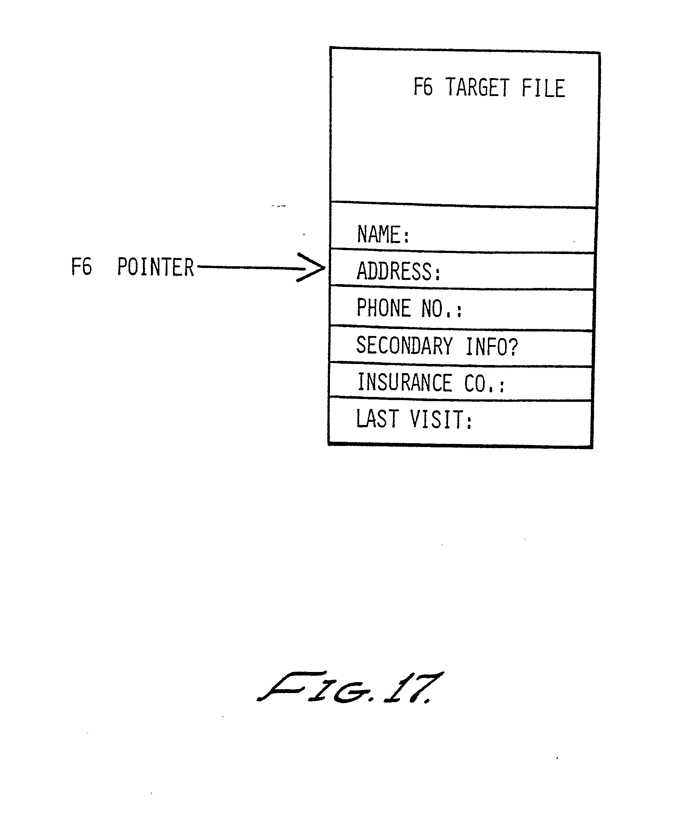

STEP 76. Since the presently recognized control character is mapped in F1-to-F6 control character table to a F6 function key, append with the prompt associated with the presently recongnize control character of the enact target prompt and response file to the script target prompt file, while appending that prompt to a F6 target file which is a file that will comprise all of the recurring prompts and which is depicted by way of example in Figure 17. A F6 pointer points to the last appended entry.

Concurrently, scan the operating source prompt and response file searching for the data field that is mapped by relative marked placement to the just appended prompt of the enact target prompt and response file which data field is marked and encapsulated by the F2 and F3 function keys. When this data field is located, isolate the raw data between the F2 and F3 control characters, and append that raw data as a response to the target script response file.

STEP 77. Scan for the next control character in the enact target prompt and response file. When found, jump to STEP 75.

STEP 78. Scan the operating source prompt and response file for the control characters mapped to the F4 and F5 function keys.  Determine the number of prompts of the
response file for the control characters mapped to the F4
and F5 function keys.  Determine the number of prompts of the
first record between the control character mapped to the
F4 and F5 function keys.  Determine which of those prompt are
associated with F2 and F3 function keys.  Determine which
prompts are used with which F2 and F3 function keys.  Consequently, the script generating program can determine:
how many prompts are in each record; which prompts of the
of the record has an associated data field; and what is the
actual prompt.  For example, in the present example as depicted in Figure 19, the third raw data field to be transferred
is associated with the fourth prompt which prompt is phone
no.:; and the data field after this prompt is the third raw
data field; and each record has seven prompts.  Additionally,
the number of records to be transfers can be determine by the
length of the first record and the total length of the operating source prompt and response file.  All of this information is compiled and is called the record information which
is used repetitively during the generation of the script
target prompt and response files.  Keep the last control
character recognized that is associated with the Fl function
key as the presently recognized control character.

STEP 79.  Increment the F6 pointer of the F6 target
file unless the F6 pointer is already at the last entry
of the F6 target file.  If the F6 pointer is already at the
last entry of the F6 target file, then clear the F6 pointer
to the beginning entry of the F6 target file.

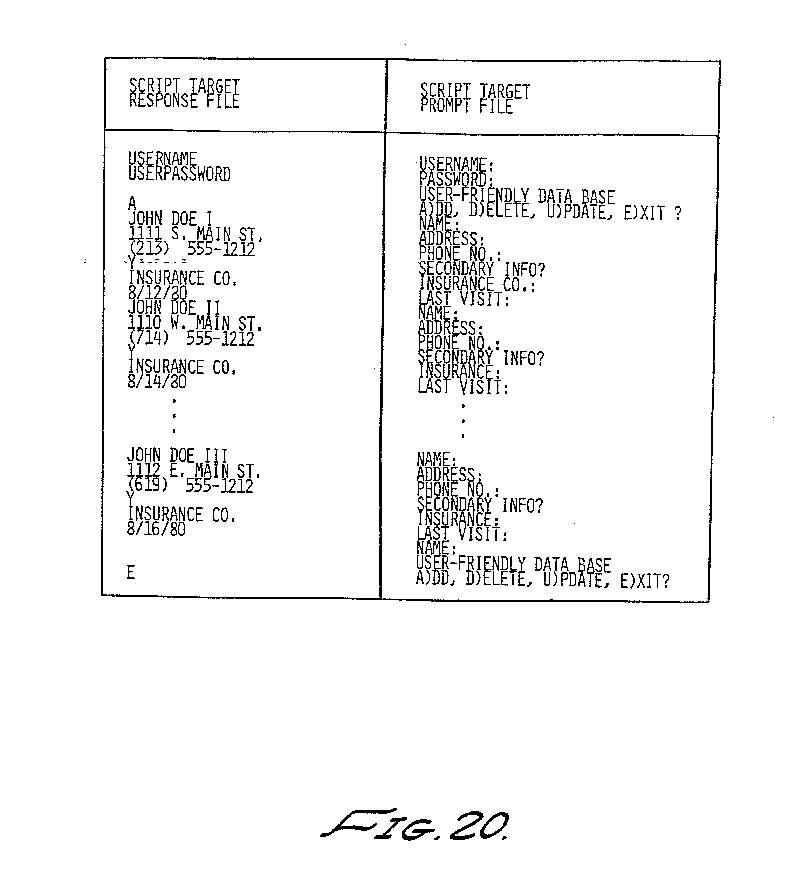

Append the prompt pointed to by the F6 pointer of the F6 target file to the script target prompt file of which an example is depicted in Figure 20.

Using the record information, isolate the response that is numerically mapped to the present pointer position of the F6 target file. Numerically mapped is the association of the Nth prompt of a record, i.e. the present F6 pointer position, with the Nth data field of the present record in which raw data is being read. This numerically mapped association effectuates the one-to-one and onto homogeneous mapping discussed above. Append the isolated raw data to the script source response file.

STEP 80. Determine if the present record has had all of its data fields read, that is, determine if the F6 target file pointer is at the last entry of the F6 table. If the F6 pointer is not at the last entry of the F6 target file, then jump back to STEP 79. Otherwise, continue.

STEP 81. Determine from the record information, if there are any more records in the operating source prompt and response file to be read, and if so, increment a counter which counts up to the total number of records and which counter is part of the record information, and then jump to STEP 79. If no more records are to be read, then jump to STEP 84.

STEP 82. Scan the enact target prompt and response file for the next control character until a control character is found or until the end of the enact target prompt and response file.

STEP 83.   If no other control characters are found, jump to STEP 86.  Otherwise, continue.

STEP 84.   If the presently recognized control character is mapped to a Fl function key, then continue. Otherwise, jump to STEP 82.

STEP 85.   Append with the response of the enact target response file with the response associated with the presently recognized control character, to the target script response file.  Append with the prompt of the enact target prompt and response file with the prompt associated with the presently recognized control character, to the target script prompt file.  Jump to STEP 82.

STEP 86.   The script generating program exits automatically to the transcription program.

STEP 87.   The transcription program menu is displayed.

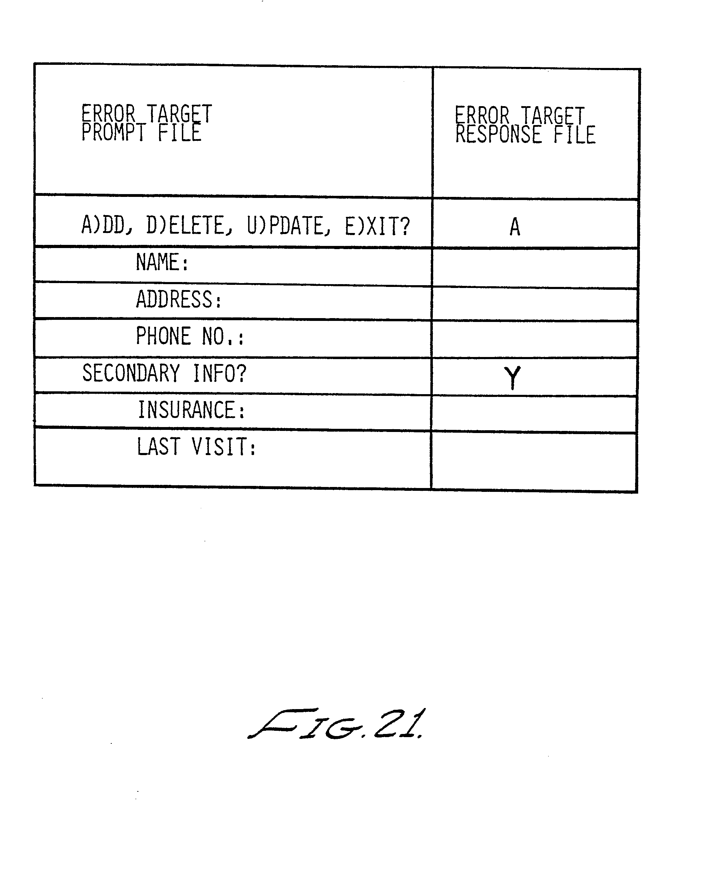

STEP 88.   Select the E option for error file entering of the error target prompt file and the error target response file.  An example of both files is depicted in Figure 21.

STEP 89.   The split screen editor is selected for entering the error target prompt file and the error target response file.

Enter into the error target prompt file the prompts of the enact target prompt and response file.  Enter into the error target response file responses to be used to respond to unexpected prompts that may erroneously occur during the transfer of data between the target and transcription computers. The error recovery method used during writing of raw data to the target computer is identical to the error recovery method used during the transfer of the data base from the source computer to the transcription computer.

STEP 90. Upon entering the error target prompt and response files, the operation strikes the special function exit key to exit the error file entering program and to return to the transcription program.

STEP 91. Transcription program displays the menu.

STEP 92. Select the A option for selecting and executing the autodialing program.

STEP 93. Enter the autodialing parameters.

STEP 94. Upon entering the last autodial parameter, transcription program automatically selects and executes the autodial process which either establishes or does not establish logical link between the target computer and the transcription computer. If the logical link was not established, then a disconnect message is displayed followed by a return to the transcription program. If the logical link was established then, a connect message is displayed followed by a return to the transcription program.

STEP 95. The menu of the transcription program is displayed. If the logical link was not established then jump to STEP 92. Otherwise, continue.

STEP 96. Select the O option to select and execute the operating program so as to execute an operating target session.

STEP 97. During this operating target session, the operating program transfers data by responding to prompts of the target computer. The prompts should be sent in sequence as the prompts are listed in the script target prompt file. As the prompts are received, the operating program responds with the corresponding responses in the script target response file, in a manner similar to the of execution of the operating source session. If a prompt is returned to the transcription computer, which is not expected, then the unexpected prompt is searched for is the error target prompt file. When found, the associated response in the error target response file is returned, in a manner similar to the error recovery method of the operating source session. Terminal errors are handled in a manner similar to the handling of terminal errors during the execution of the operating source session as discussed above.

STEP 98. Upon conclusion of transferring the script response file or upon an abort from a terminal error condition, the transcription program automatically displays a completed message or an error message, respectively. Then, the logical link is automatically terminated prior to returning to the transcription program.

STEP 99. The transcription program displays the menu. If there was a successful conclusion of transferring the script response file, then the transfer of raw data between the source and target computer has completed. If there was an error then jump to STEP 1.

It should now become apparent that the basic transfer of data occurs in two main processes. The first main process is the transferring of data from the source computer to the transcription computer and the second main process is the transfer of data from the transcription computer to the target computer.

It should also become apparent that the flow control or in other words, the communication transfer rate of data, is governed by the prompt and responses flow control mechanism of the application programs of the computers. Thus, the rate at which data is transferred is governed by both the baud rate and the flow control of the application programs used to transfer data. Responses are not sent until the receipt of respective prompts and prompts are not sent until the receipt of respective responses. Consequently, data overflow in the receiving computer is avoided as an inherent feature of the present invention. Additionally, no special transport and I/O driver programs are required because they are already available by the respective computers.

It should also become apparent that a single transcription program can be used to automatically transfer data between most source and target computers such that manual entry of data is no longer required and such that special purpose programs need not be written for transferring of data for each type of computer.

It should also become apparent that the target computer and the source computer can be the same computer, in that, a computer may have two different application programs with different data bases each of which has different data formats. A user may need to have an application program use the raw data of a data base of another application program when both application programs are presently executing on the same computer. The transcription computer can read data from that computer in one main process and then, transfer the re-formatted data back to that same computer in a second main process so as to satisfy this need.

Additionally, the source, transcription and target computers can also be the same computer. Thus, a computer system can execute two different application programs with respective data bases while executing the transcription program. In this case, two terminal ports are either connected together directly or through a modem and the phone lines. In the former case, mere port designation is required and the autodial process disregarded. Thus, the computer is connected to itself. Consequently, one of the application programs and the transcription program are executing in parallel on the same computer and parallel execution is well known in the art.

It should also become apparent that standard physical terminal ports need not be used as a means for communicating between the programs executed on the same machine. For example, a memory area in the computer system can be used as an input-output port for writing and reading so as to enable intra-computer interprogram communications. Thus, a virtual computer, that is, a computer and its ports are emulated by programs, can be used as either the source, target or transcription computers.

It also should be apparent that the flexibility of the present invention can be improved upon to the extent necessary to accommodate various data base format. But the flexibility of the present invention is sufficient to automatically transfer most data bases given most typical data base formats. In unusual data base formats, multiple rein-terations of the entire process may be required to transfer all of the raw data. This problem is remedied in part by improving the flexibility of the entire process of this preferred embodiment. For example, additional different types of control characters can be used to provide better flexibility during variable mapping of data fields and prompt as discussed previously. But in any event, data transfers performed under automatic computer control using marked mapping is still consistent with the teachings of the present invention.

Now, the entire transcription process is again listed in sequential order and in short form which each process step stated in a short statement for the comprehension and convenience of the reader. The process is as follows:

In step 1, invoke the transcription program on the transcription computer system.

In step 2, the menu is displayed on the virtual terminal of the transcription computer system.

In step 3, establish physical links between the transcription computer and both the source computer and target computer link by connecting the three computers to modems so as to permit communications between the transcription computer system and either the source computer or the target computer.

In step 4, select the A option of the menu for invoking the autodialing program.

In step 5, enter the autodialing parameters such as baud rate, parity, phone number etc.

In step 6, upon conclusion of entering the last of the autodial parameters, the autodialing program automatically invokes the autodial process; which autodial process either establishes or does not establish a logical link between the transcription computer and the source computer. If the logical link is established, then jump to step 9.

In step 7, the menu of the transcription program is automatically displayed after a disconnect message is displayed.

In step 8, jump to step 4 so as to repeat the autodial process and establish a logical link between the transcription computer and the source computer.

In step 9, the menu of the transcription program is automatically displayed on the virtual terminal of the transcription computer after a connect message is displayed.

In step 10, select the L option for invoking the listening program for executing an enact source session with the source computer.

In step 11, an enact session is now enacted during which enact source session log-on, record calling and log-off occurs and during which enact source session transcribing of data occurs in the transcription computer. Data which is transferred during the enact source session, is transcribed into two separate files. One file comprises the responses that were entered on the virtual terminal of the transcription computer. The other file comprises the prompts and responses of the source computer and transcription computer, respectively.

In step 12, upon the disconnect of the logical link between the source computer and the transcription computer after log-off, the menu of the transcription program is automatically displayed.

In step 13, select the M option for marking the files that were transcribed during the enacted source session.

In step 14, the marking program automatically invokes a split screen editor. The enact source response file and the enact source prompt and response file are displayed next to each other on the screen of the virtual terminal of the transcription computer.

In step 15, upon entering the editor pursuant to the M option, the marking program searches through the enact source response file and the enact source prompt and response file for control characters that were used during the enact source session. Control characters found are made unavailable.

In step 16, the operator moves the cursor of the editor over the beginning character of various prompts of the enact source prompt and response file and strikes a key for each prompt that is to be marked. The key which the operator is to strike is one of three special function keys and they are as follows: F1, for non-recurring responses, e g., log-on prompts; F2, for recurring prompts with non-variable responses; F3, for recurring prompts with variable responses. Each strike of one of these special function keys causes the insertion of a control character as a reference designating control character which now precedes the first character of the marked prompt of the enact source prompt and response file. Concurrently, the marking program creates a control character table. This table maps the available control characters to one of the three special function keys.

In step 17, upon the conclusion of marking necessary prompts in the enact source prompt and response file, the operator strikes another special function exit key to exit the editor and return to the transcription program.

In step 18, the transcription program displays the the transcription program.

In step 18, the transcription program displays the transcription menu on the virtual terminal.

In step 19, if the user record list is available, then load the user record list into the transcription computer; otherwise, enter parameters in a user record file.

In step 20, select the S option of the transcription menu for invoking the script generating program.

In step 21, the script generating program prompts the operator to specify the source file for generating the script. That source file can be either the user record list or the user record file. The user record list is a sequential list with all the record names; whereas, the user record file is a file comprising a beginning record, the next record, the ending record and the present record. The difference between the beginning record and the next record is that incremental difference between two successive records that are to be read from the source computer.

In step 22, the script generating program opens source script response file and a source script prompt file.

In step 23, the script generating program scans the enact source prompt and response file for control characters.

In step 24, upon the recognition of a control character, the script generating program examines the control character table to determine what type of prompt is associated with the control character. If the control character is mapped to a F2 or a F3 function key, then jump to step 26. If the control character is mapped to a F1 function key, then continue. If it is mapped to neither a F1, F2, or F3 function key, then jump to step 23.

In step 25, append the source script response file and the source script prompt file. This is accomplished by entering the response in the enact source response file associated with the presently recognized control character and secondly, by appending the source script prompt file with the prompt associated with the presently recognized control character of the enact source prompt and response file. Jump to step 23.

In step 26, if the control character is mapped to a F3 function key in the control character table, then jump to step 29. If the control character is mapped to a F2 function key, then continue.

In step 27, if the control character is mapped to a F2 function key in the control character table, then the script generating program takes the response associated with the presently recognized control character in the enact source response file and append that response in the script source response file. The associated prompt is also appended in the script source prompt file.

In step 28, the response and prompt generated in step 28 are appended to the F2 table in sequential order. Jump to step 30.

In step 29, the F3 function key represents variable responses to the recurring prompt associated with the presently recognized control character. If a user record list is used then append the next entry of the user record list into the script source response file.  If, the user record file is used then the present record is appended to the script source response file.  Append F3 prompt to script source prompt file.

In step 30, either a F2 or a F3 function key entry is appended to the sequence table, depending upon the presently recognized control character.

In step 31, scan for the next control character.

In step 32, if the control character is mapped to either a F2 or F3 function key, then jump to step 26.  If it is

mapped to a F1 function key, then continue.  If it is not

mapped to a F1, F2 or F3 function key, jump to step 31.

In step 33, increment the sequence pointer of the sequence table unless at the end of the sequence table.  If at the end, then clear the sequence pointer to the first entry.

If the entry pointed to is a F2, then continue; If it is a F3, then jump to step 35.

In step 34, if the next entry in the sequence table is a F2, increment the F2 pointer; and read the response and prompt pointed to in the F2 table and append the script source response file and the script source prompt file with the F2 table response and prompt, respectively, and jump to step 36.

In step 35, extract next variable response from either user record list or user record file and append the script source response file with that response.  Append F3 prompt to script prompt response file.

In step 36, if at the end of user record list, or the present record equals ending record of the user record file;

and, also at the end of the sequence table, then jump to step 38.  Otherwise, jump to step 34.

In step 37, scan for the next control character. If none is found, jump to step 40.

In step 38, if the presently recognized control character is not mapped to a F1 function key then jump to step 37; otherwise, continue.

In step 39, append the script source response file and the script source prompt file with the response and prompt, respectively, of the enact source response file and enact source prompt and response file, respectively, that are associated with presently recognized control character.

In step 40, when the end of the enact source prompt file is encountered, the script generating program has completed the script generation. The transcription program returns to the menu which is displayed.

In step 41, select the E option of the menu to invoke the error file entering program which uses the split screen editor.

In step 42, the operator creates an error source response file and an associated error source prompt file.

In step 43, on completion of entering the error source response file and the error source prompt file, the operator strikes the special function exit key to exit the error file entering program.

In step 44, transcription program returns to the menu.

In step 45, select A option of the transcription program menu for invoking the autodialing program.

In step 46, enter the autodialing parameters.

In step 47, upon conclusion of entering the last of the autodial parameters, the autodialing program automatically invokes the autodial process which either establishes or does not establish a logical link between the source and transcription computers. A connect or a disconnect message is displayed followed by a return to the transcription program.

In step 48, the menu of the transcription program is automatically displayed. If the logical link was not established, then jump to step 45. Otherwise, continue.

In step 49, select the O option to invoke the operating program.

In step 50, during the source operating session, the data transferred is transcribed and separated into an operating source response file and an operating response and prompt file until disconnect occurs upon the log-off which is the conclusion of the source operating session. During the source operating session, the error source response file is used when an unexpected prompt is encountered. When no prompt is returned, the program waits a time-out period before considering the session as having failed.

In step 51, upon termination of the operating program, the transcription program displays either a successful or an unsuccessful message. The transcription program then displays the menu. If the operating source session was unsuccessful, jump to step 44, otherwise continue.

In step 52, select the A option for autodialing.

In step 53, enter the autodial parameters.

In step 54, upon conclusion of entering the last autodial parameter, the autodialing program automatically invokes the autodial process which either establishes or does not establish a logical link between the target computer and the transcription computer. A connect or a disconnect message is displayed followed by a return to the transcription program.

In step 55, the menu of the transcription program is automatically displayed. If the logical link was not established, then jump to step 52; otherwise, continue.

In step 56, select the L option for invoking the listening program so as to execute an enact target session.

In step 57, the operator now enacts an enact target session during which enact target session, log-on, record call with data entry and log-off occurs similar to the enact source session except that a data entry option of the user menu is selected for data entry; and, during which enact target session, transcribing of the data occurs in the transcription computer and the data is separated into an enact target response file and an enact target prompt and response file. Upon logical disconnect during the log-off, the listening program returns to the transcription program.

In step 58, the transcription program menu is displayed.

In step 59, select the D option for invoking the data mapping program so as to mark and map the operating source response and prompt file and the enact target prompt and response file.

In step 60, the data mapping program automatically invokes the split screen editor with the operating source prompt and response file and the enact target prompt and response file are displayed.

In step 61, the data mapping program scans the operating source prompt and response file and the enact target prompt and response file for control characters used therein. The control characters used are made unavailable.

In step 62, the first six available control characters mapped to the special function keys F1 through F6, respectively, in the F1-to-F6 control character table.

In step 63, mark all non-recurring prompts of the enact target prompt and response file with the F1 function key. Mark the non-recurring prompts by marking the first character of the prompt.

In step 64, mark the beginning of the first record of the operating source prompt and response file with the F4 function key.

In step 65, mark the beginning of the second record of the operating source prompt and response file with the F5 function key thereby enclosing between the F4 function key and the F5 function key marks, the first record of the operating source prompt and response file.

In step 66, mark the beginning of each recurring prompt of the first record of tha enact target prompt and response file with the F6 function key.

In step 67, mark with the F2 function key the beginning of each of the data fields of the first record of the operating source prompt and response file, which data fields are to be transferred to the target computer. Each data field is to be mapped to a recurring prompt of the enact target prompt and response file.

In step 68, mark with the F3 function key the end of each of the data fields of the first record of the operating prompt and response file, which data fields are to be transferred to the target computer.

In step 69, strike the special function exit key to exit the data mapping program and return to the transcription program.

In step 70, the transcription program menu is displayed.

In step 71, Select the S option for invoking the script generating program for generating the script target prompt and response files.

In step 72, the script generating porgram for target script generation, scans the enact target prompt and response file searching for a control character.

In step 73, if the control character found is mapped to a F6 function key, then jump to step 75. If the control character is mapped to a F1 function key, then, continue. Otherwise, jump to step 72.

In step 74, append to the script target response file the response in the enact target response file associated with the presently recognized control character. Append the script target prompt file with the prompt associated with the presently recognized control character. Then, jump to step 72.

In step 75, if the control character is mapped to a F6 function key, then, continue. If it is mapped to a F1 function key, then jump to step 78. Otherwise, jump to step 77.

In step 76, append with the prompt mapped with the F6 function key in the F6 target table to the script target prompt file. Isolate the numerically mapped data field marked with F2 and F3 function keys and append the script target response file with the data in that data field.

In step 77, scan for the next control character. When found, jump to step 75.

In step 78, scan the operating source prompt and response file for the control characters mapped to the F4 and F5 mark keys and record record information. Record the number of prompts between the F4 and F5 mapped control characters Record the number of records. Determine the types of prompts and if a marked data field is associated with it.

In step 79, increment the F6 pointer and append with the prompt from the F6 target table to the script target prompt file. Read the next data field from the operating source prompt and response file using the record information.

In step 80, if the F6 pointer is at the last entry of the F6 target file, then continue because the present record has had all of its data field read. If not, jump to step 79.

In step 81, if there are more operating source session records to be read, go to next record and then jump to step 79. If no more records are to be read, then jump to STEP 84.

In step 82, scan the enact. target prompt and response file for the next control character.

In step 83, if no other control characters are found, jump to step 86. Otherwise, continue.

In step 84, if the control character found is mapped to a F1 function key, then continue. Otherwise, jump to step 82.

In step 85, append with the response of the enact target response file associated with the presently recognized control character to the script target response file. Append with the prompt associated with the presently recognized control character of the enact target prompt and response file to the script targett prompt file. Then, jump to step 82.

In step 86, the script generating program exits automatically to the transcription program.

In step 87, the transcription program menu is displayed.

In step 88, select the E option for invoking the error file entering the program for generating the error target prompt file and the error target response file.

In step 89, enter into the two error files the prompts and responses used to recover from an error. When an error occurs, meaning that the prompt from the target computer is not the expected prompt pursuant to the next prompt expected in the script target prompt file, process flow shifts to the error target prompt file where the prompt that was sent is searched for. If the unexpected prompt is found in the error target prompt file, the associated response in the error target response file is used to respond to the erroneous and unexpected prompt.

In step 90, upon entering the error target prompt and response files, the operator strikes the special function exit key to exit the error file entering programs and to invoke the transcription program.

In step 91, the transcription program displays the menu.

In step 92, select the A option for invoking the autodialing program.

In step 93, enter the autodialing parameters.

In step 94, upon conclusion of entering the last autodial parameter, the autodialing program automatically invokes the autodial process which either establishes or does not establish the logical link between the target computer and the transcription computer. A connect or a disconnect message is displayed followed by a return to the transcription program.

In step 95, the menu of the transcription program is displayed. If the logical link was not, jump to step 92.

In step 96, select the O option to transfer the raw data of the data fields in the script target response file to the target computer.

In step 97, the operating program transfers data by responding to prompts in sequence which prompts are of the script target prompt file and which prompts are responded to with responses in sequence which responses are of the script target response file, thereby transferring the data to the target computer. The error target prompt and response files with time-out periods are used to recover from errors.

In step 98, upon conclusion of the transferring of data or upon an unsuccessful return from an error condition, the transcription program automatically displays a completed message or an error message, respectively.

In step 99, transcription program automatically displays the menu and the logical link established is automatically terminated. The target and transcription computers are no longer logically linked through the communications modem. This concludes the transfer of raw data between the source and target computers.

CLAIMS

1.    A communication system for transporting data between source computer means and target computer means comprising,

processing means for executing programs, and

channel means connected to said processing means for connecting said processing means to said source computer means and said target computer means, said processing means being operative for mapping data read from said source computer means to data fields written to said target computer means.

2.    A communication system for transporting data between source computer means and target computer means comprising,

processing means for executing programs,

channel means connected to said processing means for connecting said processing means to said source computer means and said target computer means, and

program means executed by said processing means for mapping data read from said source computer means to data fields written to said target computer means.

3.    The channel means of Claim 2 comprising

virtual terminal means connected to said processing means, and indirectly connected to said source computer means and said tarcet computer means for enabling operation of said processing means, source computer means and target computer means,

source connection means connected to said source computer means for connecting said processing means to said source computer means,

target connection means connected to said target computer means for connecting said processing means to said target computer means, and

processing connection means connected to said processing means for connecting said processing means to said source computer means and said target computer means.

4.    A communication method for transporting data between source computer means and target computer means by the use processing means, comprising the steps of,

connecting said processing means to standard communication port means of said source computer means and said target computer means,

reading data fields of said source computer means, mapping data fields of said source computer means to data fields of said target computer, and

transferring data fields of said source computer means to data field of said target computer means.

5.    The method of Claim 4 wherein said reading step further comprises the steps of,

performing an enact source session to determine data format of data fields of records read from said source computer means,

source script generating to generate a script of

responses to prompts of said source computer means, and

source operating to read sequential records of said source computer means.

6.   The method of Claim 4 or Claim 5 wherein said mapping step further comprises the steps of,

performing an enact target session to determine data format of data fields of records written to said target computer means, and

mapping to map data fields of said source computer means to data fields of said target computer means.

7.   The method of any one of Claims 4 to 6 wherein said transferring step further comprises the steps of,

target script generating to generate a script of responses to prompts of said target computer means, and

target operating to write data fields of source computer means into records of said target computer means.

8.   The method of any one of Claims 4 to 7 wherein said connecting step further comprises the steps of,

source connecting to connect said standard communication port means of said source computer means to said processing means

target connecting to connect said standard communication port means of said target computer means to said processing means, and

virtual connecting to connect said processing means to said source computer means and said target computer means for operating said source computer means, target computer means and said processing means.

9. The method of any one of Claims 4 to 8 wherein said standard communication port means comprises physical terminal port means for connecting said source and target computer means to said processing means.

10. The method of any one of Claims 4 to 8 wherein said standard communication ports means comprises memory means as input and output means between said source and target computer means and said processing means when any of said source and target computer means and said processing means are emulated means rather than physical means.

FIG.1.

SOURCE COMPUTER 12

TARGET COMPUTER 14

MODEM 30b

PHONE LINES 16

MODEM 30c

32a    32c

34a    34b

28    MODEM 30a

-10-

| CPU | MEMORY | COMM. CONTROLLER | DISK DRIVE | TAPE DRIVE |
|---|---|---|---|---|
| 18 | 20 | 22 | 24 | 26 |

FIG. 2.

```
┌─────────────────────────────────────────────┐
│                                               │
│         TRANSCRIPTION PROGRAM MENU            │
│                                               │
├─────────────────────────────────────────────┤
│                                               │
│     A:         AUTODIALING                    │
│                                               │
│     L:         LISTENING                      │
│                                               │
│     M:         MARKING                        │
│                                               │
│     S:         SCRIPT GENERATING              │
│                                               │
│     O:         OPERATING                      │
│                                               │
│     D:         DATA MAPPING                   │
│                                               │
│     E:         ERROR FILE ENTERING            │
│                                               │
│                                               │
└─────────────────────────────────────────────┘
```

FIG. 3.

0144244

```
AUTO DIALING SESSION


AUTO-DIAL:

SYSTEM:     USERSYSTEM

SYSTEM NOT IN PHONE BOOK, ADD?       Y

PHONE NUMBER: 1-415-555-1212

DUPLEX:    FULL

PARITY:    SPACE

CHAR FORMAT:        8

DEVICE:        MICOM

PORT:       TTY7

BAUD:     1200


DIALING 1-415-555-1212

CONNECTED
```

_FIG.4._

| ENACT<br>SOURCE<br>RESPONSE<br>FILE | ENACT<br>SOURCE<br>PROMPT AND<br>RESPONSE<br>FILE |
|---|---|
| USERNAME<br>USERPASSWORD<br><br><br><br><br><br>2<br>10004<br><br><br><br>Y<br><br><br>10005<br><br><br><br>Y<br><br><br><br><br><br><br>4 | LOGIN:  USERNAME<br>PASSWORD:<br>WELCOME TO THE SYSTEM . . .  ^D<br>DAILY MENU:  ^G<br>   1)  LEDGER UPDATE<br>   2)  PATIENT DATA<br>   3)  LEDGER REPORT<br>   4)  EXIT<br>   OPTION:  2<br>PATIENT NO.:  10004<br>NAME:  JOHN DOE I<br>ADDRESS:  1111 S. MAIN ST.<br>PHONE NO.:  (213) 555-1212<br>CONTINUE?  Y<br>INSURANCE:  INSURANCE CO.<br>LAST VISIT:  8/12/80<br>PATIENT NO.:  10005<br>NAME:  JOHN DOE II<br>ADDRESS:  1110 W. MAIN ST.<br>PHONE NO.:  (714)  555-1212<br>CONTINUE?  Y<br>INSURANCE:  INSURANCE CO.<br>LAST VISIT:  8/14/80<br>PATIENT NO.:<br>DAILY MENU:  ^G<br>   1)  LEDGER UPDATE<br>   2)  PATIENT DATA<br>   3)  LEDGER REPORT<br>   4)  EXIT<br>   OPTION:  4<br>USER LOGGED OFF AT 4 P.M. |

FIG.5.

| CONTROL CHARACTER TABLE ||
|---|---|
| ^ A | F1 |
| ^ B | F3 |
| ^ C | F2 |

*FIG. 6.*

| ENACT SOURCE RESPONSE FILE | ENACT SOURCE PROMPT & RESPONSE FILE |
|---|---|
| USERNAME USERPASSWORD | ^A    LOGIN:  USERNAME<br>^A    PASSWORD<br>      WELCOME TO THE SYSTEM ... ^D<br>      DAILY MENU:    ^G<br>          1)  LEDGER UPDATE<br>          2)  PATIENT DATA<br>          3)  LEDGER REPORT<br>          4)  EXIT |
| 2<br>10004<br><br><br>Y | ^A    OPTION:    2<br>^B    PATIENT NO.:    10004<br>      NAME:    JOHN DOE I<br>      ADDRESS:    1111 S. MAIN ST.<br>      PHONE NO.:    (213)  555-1212<br>^C    CONTINUE?    Y<br>      INSURANCE:    INSURANCE CO.<br>      LAST VISIT:    8/12/80 |
| 10005<br><br>Y | ^      PATIENT NO.:    10005<br>      NAME:    JOHN DOE II<br>      ADDRESS:    1110 W. MAIN ST.<br>      PHONE NO.    (714)  555-1212<br>      CONTINUE?    Y<br>      INSURANCE:    INSURANCE CO.<br>      LAST VISIT:    8/14/80 |
| | ^A    PATIENT NO.:<br>      DAILY MENU:    ^G<br>          1)  LEDGER UPDATE<br>          2)  PATIENT UPDATE<br>          3)  LEDGER REPORT<br>          4)  EXIT |
| 4 | ^A    OPTION:    4<br>      USER LOGGED OFF AT 4 P.M. |

FIG.7

| SCRIPT SOURCE RESPONSE FILE | SCRIPT SOURCE PROMPT FILE |
|---|---|
| USERNAME<br>USERPASSWORD<br>2<br>10004<br>Y<br>10005<br>Y<br>.<br>.<br>.<br>50009<br>Y<br>4 | LOGIN:<br>PASSWORD:<br>OPTION:<br>PATIENT NO.:<br>CONTINUE?<br>PATIENT NO.:<br>CONTINUE?<br>.<br>.<br>PATIENT NO.:<br>CONTINUE?<br>PATIENT NO.:<br>OPTION: |

FIG.8.

F2 TABLE

F2 POINTER → CONTINUE ? | Y

*FIG. 9.*

SEQUENCE POINTER⟶

| SEQUENCE TABLE |
|---|
| F3 |
| F2 |
|  |
|  |
|  |

*FIG.10.*

0144244

USER RECORD LIST

10004

USER LIST POINTER ————⟶ 10005

10006

10007

⋮

50009

FIG.11.

0144244

| USER RECORD FILE | | |
|---|---|---|
| BEGINNING | RECORD | 10004 |
| NEXT | RECORD | 10005 |
| ENDING | RECORD | 50009 |
| PRESENT | RECORD | 10004 |

FIG. 12.

| ERROR SOURCE PROMPT FILE | ERROR SOURCE RESPONSE FILE |
|---|---|
| OPTION: | |
| PATIENT NO.: | |
| CONTINUE? | Y |

*FIG. 13.*

| OPERATING SOURCE RESPONSE FILE | OPERATING SOURCE PROMPT AND RESPONSE FILE |
|---|---|
| USERNAME<br>USERPASSWORD | LOGIN:    USERNAME<br>PASSWORD:<br>WELCOME TO THE SYSTEM... ^D<br>DAILY MENU:            ^G<br>    1)  LEDGER UPDATE<br>    2)  PATIENT DATA<br>    3)  LEDGER REPORT<br>    4)  EXIT |
| 2<br>10004 |     OPTION:       2<br>PATIENT NO.:    10004<br>NAME:   JOHN DOE I<br>ADDRESS:  1111 S. MAIN ST.<br>PHONE NO.:  (213) 555-1212 |
| Y | CONTINUE?  Y<br>INSURANCE:   INSURANCE CO.<br>LAST VISIT:    8/12/80 |
| 10005 | PATIENT NO.:    10005<br>NAME:    JOHN DOE II<br>ADDRESS:  1110 W. MAIN ST.<br>PHONE NO.:   (714) 555-1212 |
| Y | CONTINUE?   Y<br>INSURANCE:    INSURANCE CO.<br>LAST VISIT:    8/14/80 |
| : | : |
| 50009 | PATIENT NO.:    50009<br>NAME:   JOHN DOE III<br>ADDRESS:  1112 E. MAIN ST.<br>PHONE NO.:   (619) 555-1212 |
| Y | CONTINUE?  Y<br>INSURANCE:  INSURANCE CO.<br>LAST VISIT:     8/16/80<br>PATIENT NO.:<br>DAILY MENU:          ^G<br>    1)  LEDGER UPDATE<br>    2)  PATIENT DATA<br>    3)  LEDGER REPORT<br>    4)  EXIT |
| 4 |     OPTION:    4<br>USER LOGGED OFF AT 4 P.M. |

FIG. 14.

| ENACT TARGET<br>RESPONSE FILE | ENACT TARGET<br>PROMPT AND<br>RESPONSE FILE |
|---|---|
| USERNAME:<br>USERPASSWORD:<br><br>A<br>JOHN DOE I<br>1111 S. MAIN ST.<br>(213) 555-1212<br>Y<br>INSURANCE<br>8/12/80<br>JOHN DOE II<br>1110 S. MAIN ST.<br>(714) 555-1212<br>Y<br>INSURANCE CO.<br>8/14/80<br><br><br>E | USERNAME:  USERNAME<br>PASSWORD:<br>USER-FRIENDLY DATA BASE<br>A)DD, D)ELETE, U)PDATE, E)XIT?  A<br>NAME:  JOHN DOE I<br>ADDRESS:  1111 S. MAIN ST.<br>PHONE NO.:  (213) 555-1212<br>SECONDARY INFO?<br>INSURANCE: INSURANCE CO.<br>LAST VISIT:  8/12/80<br>NAME:  JOHN DOE II<br>ADDRESS:  1110 S. MAIN ST.<br>PHONE NO.:  (714) 555-1212<br>SECONDARY INFO?<br>INSURANCE:  INSURANCE CO.<br>LAST VISIT:  8/14/80<br>NAME:<br>USER-FRIENDLY DATA BASE<br>A)DD, D)ELETE, U)PDATE, E)XIT?  E<br>USER LOGGED OFF AT 4 P.M. |

$FIG.15.$

0144244

```
OPERATING SOURCE              ENACT TARGET
PROMPT AND                    PROMPT AND
RESPONSE FILE                 RESPONSE FILE


LOGIN: USERNAME               USERNAME:    USERNAME
PASSWORD:                     PASSWORD:
WELCOME TO THE SYSTEM . . .^D  USER-FRIENDLY DATA BASE
DAILY MENU:         ^G         A)DD, D)ELETE, U)PDATE, E)XIT?  A
      1)   LEDGER UPDATE      NAME:    JOHN DOE I
      2)   PATIENT DATA       ADDRESS:   1111 S. MAIN ST.
      3)   LEDGER REPORT      PHONE NO.:  (213)  555-1212
      4)   EXIT               SECONDARY INFO?  Y
        OPTION:     2         INSURANCE:    INSURANCE CO.
PATIENT NO.:  10004           LAST VISIT:  8/12/80
NAME:   JOHN DOE I            NAME:    JOHN DOE II
ADDRESS:   1111 S. MAIN ST.   ADDRESS:   1110 S. MAIN ST.
PHONE NO.:   (213)  555-1212  PHONE NO.:  (714)  555-1212
CONTINUE?                     SECONDARY INFO?  Y
INSURANCE:   INSURANCE CO.    INSURANCE:   INSURANCE CO.
LAST VISIT:   8/12/80         LAST VISIT:  8/14/80
PATIENT NO.:   10005          NAME:    .
NAME:   JOHN DOE II           USER-FRIENDLY DATA BASE
ADDRESS:   1110 S. MAIN ST.   A)DD, D)ELETE, U)PDATE, E)XIT?      E
PHONE NO.:   (714)  555-1212  USER LOGGED OFF AT 4 P.M.
CONTINUE?  Y
INSURANCE:   INSURANCE CO.
LAST VISIT:   8/14/80

          ⋮


PATIENT NO.:   50009
NAME:   JOHN DOE III
ADDRESS:   1112 E. MAIN ST.
PHONE NO.:   (619)  555-1212
CONTINUE?     Y
INSURANCE:   INSURANCE CO.
LAST VISIT:   8/16/80
PATIENT NO.:
DAILY MENU:        ^G
      1)   LEDGER UPDATE
      2)   PATIENT DATA
      3)   LEDGER REPORT
      4)   EXIT
        OPTION:     4
USER LOGGED OFF AT  4 P.M.
```

*FIG.16.*

```
                    ┌──────────────────────┐
                    │                      │
                    │    F6 TARGET FILE     │
                    │                      │
                    │                      │
                    ├──────────────────────┤
                    │ NAME:                │
                    ├──────────────────────┤
F6  POINTER ──────> │ ADDRESS:             │
                    ├──────────────────────┤
                    │ PHONE NO.:           │
                    ├──────────────────────┤
                    │ SECONDARY INFO?      │
                    ├──────────────────────┤
                    │ INSURANCE CO.:       │
                    ├──────────────────────┤
                    │ LAST VISIT:          │
                    └──────────────────────┘
```

*FIG.17.*

0144244

| F1 TO F6 CONTROL CHARACTER TABLE | |
|---|---|
| ^A | F1 |
| ^B | F2 |
| ^C | F3 |
| ^E | F4 |
| ^F | F5 |
| ^H | F6 |

*FIG.18.*

```
┌──────────────────────────────────┬──────────────────────────────────┐
│ OPERATING SOURCE                 │ ENACT TARGET                     │
│ PROMPT AND                       │ PROMPT AND                       │
│ RESPONSE FILE                    │ RESPONSE FILE                    │
├──────────────────────────────────┼──────────────────────────────────┤
│                                  │ ^A  USERNAME:    USERNAME        │
│ LOGIN:    USERNAME               │ ^A  PASSWORD:                    │
│ PASSWORD:                        │     USER-FRIENDLY DATA BASE      │
│ WELCOME TO THE SYSTEM ... ^D     │ ^A  A)DD, D)ELETE, U)PDATE, E)XIT? A │
│ DAILY MENU:  ^G                  │ ^H  NAME:    JOHN DOE I          │
│       1)  LEDGER UPDATE          │ ^H  ADDRESS:  1110 S. MAIN ST.   │
│       2)  PATIENT DATA           │ ^H  PHONE NO.:  (213) 555-1212   │
│       3)  LEDGER REPORT          │ ^H  SECONDARY INFO?  Y           │
│       4)  EXIT                   │ ^H  INSURANCE:  INSURANCE CO.    │
│       OPTION:   2                │ ^H  LAST VISIT:  8/12/80         │
│ ^E  PATIENT NO.:   10004         │     NAME:    JOHN DOE II         │
│     NAME: ^BJOHN DOE I^C         │     ADDRESS:  1110 S. MAIN ST.   │
│     ADDRESS:  ^B1110 S. MAIN ST.^C │   PHONE NO.  (714) 555-1212    │
│     PHONE NO. ^B(213) 555-1212^C │     SECONDARY INFO?  Y           │
│     CONTINUE? ^BY^C              │     INSURANCE:   INSURANCE CO.   │
│     INSURANCE:^BINSURANCE CO. ^C │     LAST VISIT:  8/14/80         │
│ ^F  LAST VISIT:  ^B8/12/80^C     │ ^A  NAME:                        │
│ ^F  PATIENT NO.:   10005         │     USER FRIENDLY DATA BASE      │
│     NAME:    JOHN DOE II         │ ^A  A)DD, D)ELETE, U)PDATE, E)XIT? E │
│     ADDRESS:   1110 S. MAIN ST.  │     USER LOGGED OFF AT 4 P.M.    │
│     PHONE NO.:  (714) 555-1212   │                                  │
│     CONTINUE?  Y                 │                                  │
│     INSURANCE:-- INSURANCE CO.   │                                  │
│     LAST VISIT:   8/14/80        │                                  │
│                  :               │                                  │
│                  :               │                                  │
│                                  │                                  │
│     PATIENT NO.:  50009          │                                  │
│     NAME:  JOHN DOE III          │                                  │
│     ADDRESS:   1112 E. MAIN ST.  │                                  │
│     PHONE NO.:  (619) 555-1212   │                                  │
│     CONTINUE?  Y                 │                                  │
│     INSURANCE:   INSURANCE CO.   │                                  │
│     LAST VISIT:   8/16/80        │                                  │
│     PATIENT NO.::                │                                  │
│     DAILY MENU:   ^G             │                                  │
│        1)  LEDGER UPDATE         │                                  │
│        2)  PATIENT DATA          │                                  │
│        3)  LEDGER REPORT         │                                  │
│        4)  EXIT                  │                                  │
│        OPTION:   4               │                                  │
│     USER LOGGED OF AT 4 P.M.     │                                  │
└──────────────────────────────────┴──────────────────────────────────┘
```

FIG.19.

| SCRIPT TARGET<br>RESPONSE FILE | SCRIPT TARGET<br>PROMPT FILE |
|---|---|
| USERNAME<br>USERPASSWORD<br><br>A<br>JOHN DOE I<br>1111 S. MAIN ST.<br>(213) 555-1212<br>Y<br>INSURANCE CO.<br>8/12/30<br>JOHN DOE II<br>1110 W. MAIN ST.<br>(714) 555-1212<br>Y<br>INSURANCE CO.<br>8/14/30<br>.<br>.<br>.<br><br>JOHN DOE III<br>1112 E. MAIN ST.<br>(619) 555-1212<br>Y<br>INSURANCE CO.<br>8/16/80<br><br>E | USERNAME:<br>PASSWORD:<br>USER-FRIENDLY DATA BASE<br>A)DD, D)ELETE, U)PDATE, E)XIT ?<br>NAME:<br>ADDRESS:<br>PHONE NO.:<br>SECONDARY INFO?<br>INSURANCE CO.:<br>LAST VISIT:<br>NAME:<br>ADDRESS:<br>PHONE NO.:<br>SECONDARY INFO?<br>INSURANCE:<br>LAST VISIT:<br>.<br>.<br>.<br><br>NAME:<br>ADDRESS:<br>PHONE NO.:<br>SECONDARY INFO?<br>INSURANCE:<br>LAST VISIT:<br>NAME:<br>USER-FRIENDLY DATA BASE<br>A)DD, D)ELETE, U)PDATE, E)XIT? |

FIG.20.

| ERROR TARGET PROMPT FILE | ERROR TARGET RESPONSE FILE |
|---|---|
| A)DD, D)ELETE, U)PDATE, E)XIT? | A |
| NAME: | |
| ADDRESS: | |
| PHONE NO.: | |
| SECONDARY INFO? | Y |
| INSURANCE: | |
| LAST VISIT: | |

*Fig.21.*